# EUROPÄISCHE PATENTSCHRIFT

(11) **EP 1 516 138 B1**
(45) Veröffentlichungstag und Bekanntmachung des Hinweises auf die Patenterteilung: **25.01.2006**
(21) Anmeldenummer: 03735138.4
(22) Anmeldetag: 04.06.2003
(51) Int. Cl.: F16K 3/28

(54) **ABSPERRARMATUR**
SHUT-OFF FITTING
ROBINET D'ARRET

(30) Priorität: 27.06.2002 AT 9662002
(43) Veröffentlichungstag der Anmeldung: 23.03.2005
(73) Patentinhaber: E. Hawle Armaturenwerke GmbH, 4840 Vöcklabruck (AT)
(72) Erfinder: POHN, Franz, Johann, A-4840 Vöcklabruck (AT); SCHLAGNITWEIT, Rupert, A-4850 Puchkirchen am Trattberg (AT); BERGER, Christian, A-4650 Lambach (AT); FÜHRER, Gerhard, A-4870 Pfaffing (AT)
(74) Vertreter: Secklehner, Günter
(86) Internationale Anmeldenummer: PCT/AT2003/000163
(87) Internationale Veröffentlichungsnummer: WO 2004/003413

(56) Entgegenhaltungen:
- DE-B- 1 093 634
- DE-C- 527 748
- FR-E- 83 972
- GB-A- 2 149 065

## Beschreibung

Die Erfindung betrifft eine Absperrarmatur, wie im Oberbegriff des Anspruches 1 beschrieben und ein Absperrelement, wie im Oberbegriff des Anspruches 52 beschrieben.

Aus dem Dokument DE 1 093 634 ist ein Absperrventil mit einem aus einem Träger und einer Ummantelung aus elastischem Material bestehenden Verschlussstück bekannt. Das das mit dem elastischem Material ummantelte Verschlussstück ist durch einen einseitig, kugelkalottenförmig abgeschlossenen Hohlzylinder gebildet der an seiner Außenfläche mit der Ummantelung aus dem elastischem Material versehen ist und aus einer einen Strömungskanal eines Ventilgehäuses sperrenden, in eine den Strömungskanal freigebende Stellung verstellbar. Dies erfolgt mittels einer in einem Halsfortsatz des Ventilgehäuses drehbar und dichtend gelagerten Gewindespindel, die mit einem Innengewinde im Verschlussstück in Eingriff steht. Die elastische Ummantelung bildet mit diametral gegenüberliegend angeformten Führungsleisten und diese aufnehmenden im Gehäuse in einer zur Strömungsrichtung senkrecht verlaufenden Ebene ausgebildeten Führungsnuten eine Linearführung zur verdrehgesicherten und gegenüber dem Druck des Mediums abgestützten Positionierung des Verschlussstücks aus. Die Spindellagerung im Halsfortsatz ermöglicht durch ein elastisches Lager- und Dichtelement, zur Erzielung einer dichtenden Anlage an den Strömungskanal umfassenden Dichtflächen eine Pendelbewegung der Stellspindel.

Aus dem weiteren Dokument DE 527 748 ist eine Dichtungsvorrichtung für einen Abschlusskörper eines Absperrhahns bzw.-ventils oder -schiebers bekannt, bei der der Abschlusskörper einen hohlzylindrischen, an einer Stirnseite geschlossenen, Grundkörper aufweist und der an der etwa zylindrischen Außenfläche mit einer aus elastischem Material gebildeten Ummantelung zur dichtenden Anlage in einer Gehäuseausformung, eines den Strömungskanal ausbildenden Ventilgehäuses, versehen ist. Die Verstellung des Absperrkörpers erfolgt über eine Stellspindel in einer durch den Strömungskanal vorgegebenen Strömungsrichtung senkrechten Richtung, wobei der Absperrkörper mit diametral gegenüber liegenden Führungsflügeln versehen ist, die in linear verlaufenden Führungsnuten eines Halsfbrtsatzes eingreifen und damit eine Verdrehsicherung und Führung bewirkt wird. Zur Vermeidung von Verformungen des hohlzylindrischen Absperrkörpers durch den Druck des Mediums sind die Ummantelung und Wandung des Absperrelements querende Bohrungen, die einen Druckausgleich bewirken, vorgesehen.

Aus der DE 19 16 347 A1 ist ein Verfahren zur Herstellung einer Absperrarmatur und eine Absperrarmatur bekannt, die ein einstückiges Armaturengehäuse mit einem einen Strömungskanal ausbildenden Gehäuseteil und einen eine Schieberkammer für einen Keilschieber und eine Spindeldurchführung mit Dichtanordnung ausbildenden, mit dem Gehäuseteil einstückig verbundenen Gehäusefortsatz aufweist, zur gänzlichen Aufnahme eines mit der Schieberspindel verstellbar als Keilschieber ausgebildeten Absperrelementes, welches verdrehgesichert im Armaturengehäuse geführt ist Die Ausbildung betrifft eine sogenannte hartdichtende Schieberarmatur und sind dem Strömungskanal umfassend im Armaturengehäuse gegenüberliegende Dichtflächen ausbildende Dichtelemente, denen gegengleiche Dichtflächen am Keilschieber zugeordnet sind, angeordnet. Zur Herstellung eines einstückigen Armaturengehäuses für eine derartige Absperrarmatur ist ein aufwendiger Formenaufbau und Formvorgang erforderlich, um den vorgefertigten Keilschieber in einen Formkern und mit diesen in einer Gießform zu positionieren.

Weiters ist aus der DE 33 02 979 A1 eine Absperrarmatur mit einem im wesentlich einstückigen Armaturengehäuse bekannt, das mit einer seitlichen Montageöffnung zum Einbringen des Absperrelementes sowie der Lageranordnung versehen ist und die mit einem Gehäusedeckel dichtend verschließbar ist. Um die erforderliche Dichtheit, insbesondere bei höheren Nenndrücken zu erreichen, ist eine aufwendige Bearbeitung des Gehäuses und des Gehäusedeckels an den Dichtflächen und eine besondere Ausbildung der Befestigung des Gehäusedeckels erforderlich.

Aufgabe der Erfindung ist es eine Abspenarmatur unabhängig der Ausbildung als einstückiges oder mehrteiliges Armaturengehäuse zu schaffen, mit dem der gesamte auftretende Druckbereich beherrschbar ist und durch eine einfache Montierbarkeit von Armatureneleinenten aus den Eigenschaften des zu beherrschenden Mediums angepassten Materialien die Absperrarmatur universell einsetzbar ist.

Diese Aufgabe der Erfindung wird durch die im Kennzeichenteil des Anspruches 1 wiedergegebenen Merkmale erreicht. Der Vorteil der erfindungsgemäßen Ausbildung ist, dass die das Absperrelement bildenden Komponenten bestehend aus einem Grundkörper, Dichtelementen und gegebenenfalls Stütz- und Befestigungsmittel durch den Strömungskanal in die Wirkposition in das Armaturengehäuse eingebracht, der Grundkörper mit der Spindelmutter gekuppelt und in Montageschritten das Absperrelement komplettiert werden kann, ohne dass aufwendige Montagehilfsmittel erforderlich sind.

Von Vorteil ist aber auch eine Ausbildung nach Anspruch 2, weil dadurch eine Fertigung des Armaturengehäuses erreicht wird, durch die ohne Nachbearbeitung eine Montage der Komponenten für die Dicht- und Lageranordnung im Bereich der Schieberspindel- Durchführung vorgenommen werden kann.

Vorteilhaft ist eine Ausbildung nach Anspruch 3, weil dadurch die Lagerhaltung der für die Fertigmontage vorgefertigten Komponenten infolge der geringen Teilezahl vereinfacht und eine auftragsbezogene Fertigstellung infolge kurzer Montagezeit erreicht wird.

Es ist aber auch eine Ausbildung nach Anspruch 4 vorteilhaft, weil dadurch vereinfachte Fertigungsmethoden für die Herstellung der Armaturengehäuse herangezogen werden können.

Gemäß den vorteilhaften Ausbildungen wie in den Ansprüchen 5 bis 8 beschrieben ist es möglich, jeweils eine, entsprechend einem bestimmten Einsatzzweck der Absperrarmatur geeignete Gehäuseteilung vorzusehen.

Gemäß der vorteilhaften Weiterbildung wie im Anspruch 9 beschrieben, wird eine, bis in hohe Druckbereiche ausreichende und verlässliche Verbindung von Gehäuseteilen bei mehrteiligen Gehäusen erreicht

Gemäß den in den Ansprüchen 10 bis 13 beschriebenen vorteilhaften Ausbildungen wird ein, bei der Verstellung des Absperrelements durch die Schieberspindel aufgebrachtes Drehmoment von den Führungen der Spindelmutter aufgenommen und damit das Absperrelement, im besonderen die Dichtelemente des Absperrelements, vor unsymmetrischer Belastung und damit ungleicher Abnützung und Beschädigung wirkungsvoll geschützt.

Gemäß den in den Ansprüchen 14 und 15 beschriebenen, vorteilhaften Weiterbildungen wird ein einfacher Kupplungsvorgang zur Herstellung der Bewegungsverbindung zwischen der Spindelmutter und dem Grundkörper des Absperrelements bei der Montage, insbesondere bei einer Ausbildung der Absperrarmatur mit einem einstückigen Armaturengehäuse, erreicht.

Gemäß der vorteilhaften Ausbildung wie im Anspruch 16 beschrieben wird ein einfach zu fertigender Bauteil für den Grundkörper des Absperrelementes erreicht.

Vorteilhafte Ausbildungen beschreiben auch die Ansprüche 17 bis 19 wodurch insbesondere für größere Nennweiten wie beispielsweise über 100 mm der Aufbau des Sperrelementes vereinfacht und die Montage innerhalb eines einteiligen Gehäuses erleichtert wird.

Weitere vorteilhafte Ausbildungen beschreiben die Ansprüche 20 bis 24, wodurch die auf das Absperrelement einwirkende Druckbelastung durch das Medium in der Führungsanordnung aufgenommen und von der Schieberspindel ferngehalten wird und die Leichtgängigkeit bei der Verstellung des Absperrelements gewährleistet wird. Besonders vorteilhaft ist die Anordnung von Führungselementen im Grundkörper, die diesen in etwa im Bereich der Mittelachse in seiner Außenabmessung überragen, weil damit eine symmetrische Ableitung von Druckbelastungen in die Führungsanordnung gegeben ist.

Möglich ist aber auch ein einstückiger Aufbau des Grundkörpers mit den Führungselementen, wie im Anspruch 25 beschrieben, weil dadurch eine Montagevereinfachung erreicht wird.

Eine weitere vorteilhafte Ausbildung beschreibt Anspruch 26, weil dadurch die Komplettierung des Absperrelementes durch Montage der Dichtelemente im gekuppelten Zustand des Grundkörpers mit der Spindelmutter, also im Bereich des Armaturengehäuses vereinfacht wird.

Gemäß der vorteilhaften Weiterbildung wie in den Ansprüchen 27 bis 29 beschrieben, wird ein Durchtritt des Mediums durch das Absperrelement in der Sperrstellung wirkungsvoll verhindert.

Vorteilhafte Weiterbildungen beschreiben aber auch die Ansprüche 30 bis 33, weil dadurch eine verlässliche und leicht montierbare Dichtanordnung im Bereich der Schieberspindeldurchführung bis hin zu höchster Druckbelastung erreicht wird.

Vorteilhaft ist dabei eine Ausbildung nach Anspruch 34, wodurch zusätzliche Befestigungselemente eingespart und die Montage, vereinfacht wird.

Eine vorteilhafte Weiterbildung nach Anspruch 35 gewährleistet eine Verdrehsicherung und verhindert dadurch ein unbeabsichtigtes Lösen des Dichtungsträger aus dem Gehäusehalsfortsatz.

Gemäß den in den Ansprüchen 36 bis 40 beschriebenen, vorteilhaften Ausbildungen wird eine besonders leichtgängige radiale wie auch axiale Belastungen aufnehmende Lagerung der Schieberspindel erreicht, wodurch die Leichtgängigkeit der Verstellung gewährleistet wird.

Es ist aber auch eine Ausbildung wie im Anspruch 41 beschrieben möglich, weil damit Lagerelemente, z.B. durch Vergießen eines Lagerspaltes mit einer aushärtbaren, für Lagerzwecke geeignete Kunststoffmasse, eingespart werden.

Gemäß einer vorteilhaften Ausbildung wie im Anspruch 42 beschrieben, wird ein verlässlicher, abdichtender Gehäusehalsverschluss erreicht, der einfach zu montieren und demontieren ist, wodurch Wartungsarbeiten bzw. Austausch der Dichtsätze oder Lagerelemente erleichtert wird.

Gemäß den in den Ansprüchen 43 bis 49 ist eine vorteilhafte Ausbildungen beschriebenen, mit der eine vielseitig einsetzbare Absperrarmatur durch die Kombination der unterschiedlichsten Materialien für die einzelnen Elemente der Absperrarmatur sowie für das Armaturengehäuse möglich ist, wodurch die Absperrarmatur von einem Unterdruck bis in einem hohen Druckbereich, sowie für Medien aller Art bis hin zu hochaggressiven Medien und für einen weiten Temperaturbereich einsetzbar ist.

Die vorteilhafte Ausbildung wie im Anspruch 50 beschrieben, gewährleistet eine Entlastung sowie eine verlässlich dichtende Anlage unter Ausschaltung einer Überbelastung der Dichtelemente zur Erzielung eines gleichmäßigen Anlagedruckes an den Dichtflächen, wodurch ein vorzeitiger Verschleiß oder Beschädigung der Dichtelement wirkungsvoll verhindert wird.

Schließlich ist aber auch eine Ausbildung wie im Anspruch 51 beschrieben, wodurch eine Mehrfachdichtwirkung und höhere Elastizität der Dichtelemente im Anlagebereich erreicht wird und damit auch weniger elastische Materialien, wie sie für manche Einsatzzwecke vorteilhaft sind, zur Anwendung gelangen und dabei auch eine höhere Standzeit zu erzielen ist.

Zum besseren Verständnis der Erfindung wird diese anhand der in den Figuren gezeigten Ausführungsbeispielen näher erläutert.

Es zeigen:
- Fig. 1: eine erfindungsgemäße Absperrarmatur in Ansicht, geschnitten gemäß den Linien I-I in Fig. 2;
- Fig. 2: die Absperrarmatur, geschnitten gemäß den Linien II - II in Fig. 1;
- Fig. 3: die Absperrarmatur, geschnitten gemäß den Linien III - III in Fig. 1;
- Fig. 4: eine andere Ausführung der erfindungsgemäßen Absperrarmatur, geschnitten;
- Fig. 5: die erfindungsgemäße Absperrarmatur mit einem geteilten Armaturengehäuse in vereinfachter Darstellung;
- Fig. 6: eine weitere Ausbildung eines geteilten Armaturengehäuses in vereinfachter Darstellung;
- Fig. 7: eine andere Ausbildung eines geteilten Armaturengehäuses in vereinfachter Darstellung;
- Fig. 8: eine Variante einer Kupplungsanordnung in einer Detaildarstellung mit dem Absperrelement und der Spindelmutter in Ansicht, teilweise geschnitten;
- Fig. 9: die Kupplungsanordnung geschnitten gemäß den Linien IX-IX in Fig. 8;
- Fig. 10: eine andere Ausbildung des Armaturengehäuses mit einer Führungsanordnung für das Absperrelement in einer Draufsicht auf einen Gehäusehalbschnitt;
- Fig. 11: eine weitere Ausbildung der erfindungsgemäßen Absperrarmatur geschnitten gemäß den Linien XI-XI in Fig. 12;
- Fig. 12: die Absperrarmatur geschnitten gemäß den Linien XII-XII in Fig. 11;
- Fig. 13: eine andere Ausbildung der erfindungsgemäßen Absperrarmatur, geschnitten;
- Fig. 14: ein Detail der Absperrarmatur geschnitten gemäß den Linien XIV-XIV in Fig. 13.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

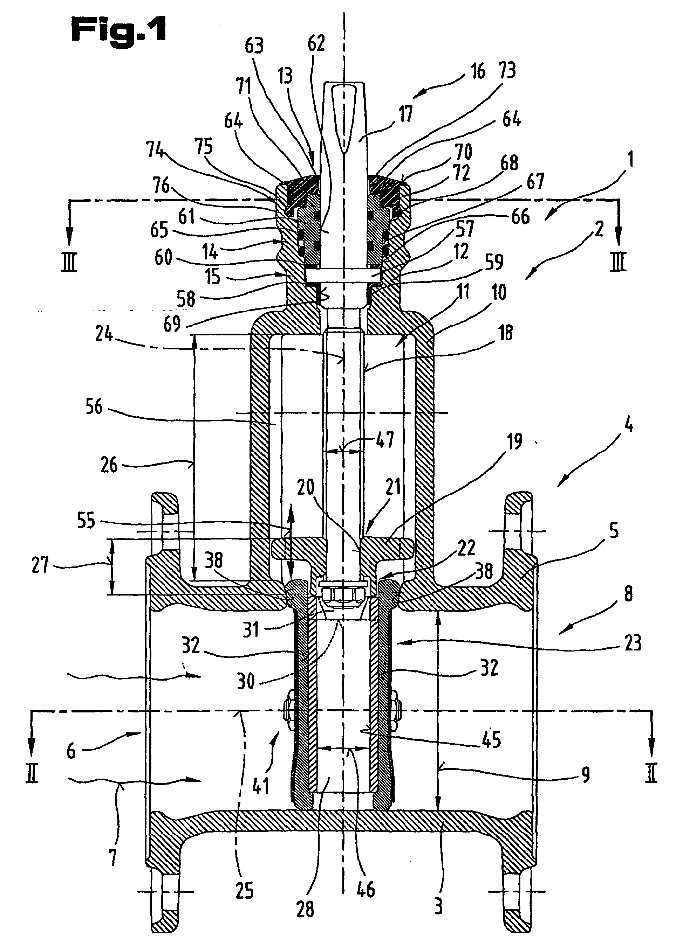

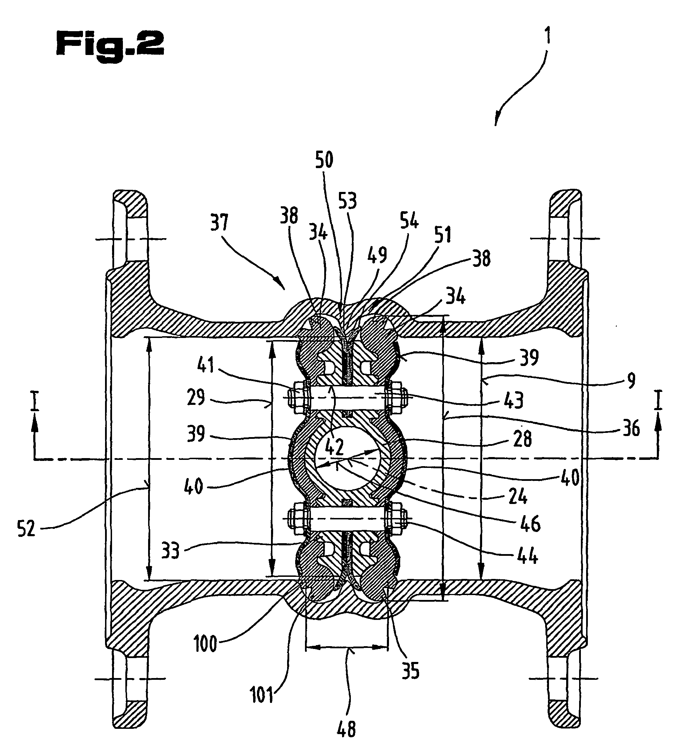

In den Fig. 1 und 2 ist eine Absperrarmatur 1, insbesondere eine Schieberarmatur 2, gezeigt. Diese besteht aus einem Armaturengehäuse 3, welches zwischen beabstandeten Anschlussarmaturen 4, im gezeigten Ausführungsbeispiel Anschlussflansche 5, einen Strömungskanal 6 für ein Medium gemäß - Pfeile 7 - ummantelt Ein Strömungsquerschnitt 8 wird durch eine Nennweite 9 des Strömungskanals 6 gebildet. Weiters bildet das Armaturengehäuse 3 mit einem Gehäuseaufsatz 10 eine Schieberkammer 11 und in einem anschließenden Gehäusehalsfortsatz 12 eine Spindeldurchführung 13 mit einer Dichtanordnung 14 und einer Lageranordnung 15 für eine Schieberspindel 16 aus.

Die Schieberspindel 16 durchragt mit einem Spindelansatz 17 den Gehäusehalsfortsatz 12 in die Schieberkammer 11 und weist im Bereich der Schieberkammer 11 ein Außengewinde 18 auf, mit dem eine Spindelmutter 19 mit einem in einer Bohrung 20 angeordneten Innengewinde 21 in Eingriff steht. Die Spindelmutter 19 ist über eine lösbare Kupplungsanordnung 22 mit einem Absperrelement 23 lösbar verbunden.

Eine Längsmittelachse 24 des Gehäuseaufsatzes 10, Gehäusehalsfortsatzes 12 und der Schieberspindel 16 verläuft senkrecht zu einer Mittelachse 25 des Strömungskanals 6.

Die vom Gehäuseaufsatz 10 gebildete Schieberkammer 11 weist in Richtung einer Längserstreckung eine Länge 26 auf, die für eine völlige Freigabe des Strömungsquerschnittes 8 durch das Absperrelement 23 ausgelegt ist und entspricht dabei etwa der Nennweite 9 zuzüglich einer Bauhöhe 27 der Spindelmutter 19.

Das Absperrelement 23 wird durch einen scheibenförmigen Grundkörper 28 mit einer Außenabmessung 29 gebildet, die geringfügig kleiner ist als die Nennweite 9. Der Spindelmutter 19 zugewandt weist der Grundkörper 28 Kupplungsnuten 30 für den Eingriff von hackenförmigen Kupplungsmitteln 31 der Spindelmutter 19 auf, womit die lösbare Kupplungsanordnung 22 zwischen der Spindelmutter 19 und dem Grundkörper 28 des Absperrelementes 23 gebildet wird.

Entgegengesetzte Sitzflächen 32 des Grundkörpers 28 weisen eine durch Rippen 33 gebildete Struktur auf und sind auf diesen Stützflächen 32 mit einer gegengleich ausgebildeten Struktur, womit eine formschlüssige Anlage erreicht wird, scheibenförmige sogen. weiche Dichtelemente 34 angeordnet. Diese Dichtelemente 34 weisen eine umlaufende Randwulst 35 auf, wobei ein Außenmaß 36 größer ist als die Nennweite 9 und zur dichtenden Anlage an gegenüberliegenden durch eine Gehäuseausformung 37 gebildeten Dichtflächen 38 vorgesehen sind.

Zur Abstützung der Dichtelemente 34 und deren Befestigung auf den Grundkörper 28 dienen auf entgegengesetzten Stirnflächen 39 der Dichtelemente 34 angeordnete Stützscheiben 40, die über Befestigungsmittel 41 z.B. den Grundkörper 28, die Dichtelemente 34 und Stützbleche 40 in Bohrungen 42 querende Gewindebolzen 43 und Gewindemuttern 44 befestigt sind.

Zu erwähnen ist weiters, dass der Grundkörper 28 konzentrisch zur Längsmittelachse 24 mit einer über den gesamten Durchmesser 29 erstreckenden Aufnahmebohrung 45 zur Hindurchführung der Schieberspindel 16 versehen ist, wobei ein Innendurchmesser 46 geringfügig größer ist, als ein Gewindeaußendurchmesser 47 der Schieberspindel 16.

Die Ausbildung des Strömungskanals ist bevorzugt mit kreisförmigen Strömungsquerschnitt 8 vorgesehen und es verlaufen beidseits des Absperrelements 23 verlaufende Strömungskanalbereiche zueinander fluchtend und weisen einen gleichen Strömungsquerschnitt 8 aufweisen. Bei einer derartigen Ausbildung entspricht die Nennweite 9 einem Nenndurchmesser des Strömungskanals 6 und die Außenabmessung 29 des Grundkörpers 28 einem Außendurchmesser.

Möglich ist aber auch eine andere Geometrie für den Strömungskanal 6, wie beispielsweise eine ovale oder eliptische Form.

Erfindungsgemäß ist dabei wesentlich, die Außenabmessung 29 des Grundkörpers 28, bei der kreisrunden Form den Durchmesser, geringfügig kleiner als die Nennweite 9 entsprechend einem Nenndurchmesser, des Strömungskanals 6 zu wählen.

Bei einer ovalen oder eliptischen Form ist es erfindungswesentlich, die minimalste Außenabmessung 29 des Grundkörpers 28 geringfügig kleiner als das Minimalmaß der Nennweite 9 des Strömungsquerschnittes 8 zu wählen.

Diese Vorgaben vereinfachen jedenfalls ein Einführen des Grundkörpers 28, Kuppeln mit der Spindelmutter 19 und Montieren der Dichtelemente 34 bei einem einteiligen Armaturengehäuse 3 ganz wesentlich, wodurch auch Montagehilfsmittel und Montagezeiten eingespart werden.

Im Bereich der gegenüberliegenden Gehäuseausformungen 37 sind etwa im Mittel einer mittleren Distanz 48 zwischen den Dichtflächen 38, in Richtung des Grundkörpers 28 vorragende Führungsstege 49 mit einem etwa dreieckförmigen Querschnitt ausgebildet, die bis in den Bereich der Schieberkammer 11 verlaufen, die mit im Grundkörper 28 fixierte und dessen Durchmesser 29 in Richtung der Führungsstege 49 überragende Führungselemente 50 zusammenwirken, wodurch eine lineare Führungsanordnung 51 und damit Verdrehsicherung für das Absperrelement 23 erreicht wird. Eine lichte Weite 52 zwischen den Führungsstegen 49 ist gleich oder gering größer dem Nenndurchmesser 9. Die Führungselemente 50 sind beispielsweise in schlitzförmigen Ausnehmungen 53 des Grundkörpers 28 angeordnet und mit den den Grundkörper 28 querenden Befestigungsmitteln 41 in der Ausnehmung 53 fixiert. Bevorzugt sind die Führungselemente 50 durch paarweise angeordnete, im Überstandsbereich abgewinkelte Führungsbleche 54 gebildet die die Führungsstege 49 V-förmig umfassen.

Die Betätigung des Absperrelementes 23 erfolgt, wie bereits vorhergehend beschrieben, mittels der über die Kupplungsanordnung 22 mit dem Absperrelement 23 gekuppelten Spindelmutter 19, die im Gewindeeingriff mit dem Außengewinde 18 der Schieberspindel 16 steht. Weiters ist die Spindelmutter 19 in der Schieberkammer 11 verdrehgesichert in Verstellrichtung gemäß - Doppelpfeil 55 - verstellbar geführt. Dazu sind im bezug auf die Längsmittelachse 24 diametral gegenüberliegende, parallel zur Längsmittelachse 24 verlaufende Führungen 56 im Gehäuseaufsatz 10 angeordnet, in die Führungsfortsätze der Spindelmutter 19 eingreifen. Damit wird eine Linearbewegung der Spindelmutter 19 und damit des Absperrelementes 23, ausgehend von einer Drehbewegung der im Gehäusehalsfortsatz 12 drehbar gelagerten Schieberspindel 16, erreicht.

Im Gehäusehalsfortsatz 12 ist in der Lageranordnung 15 die Schieberspindel 16 über einen umlaufenden Lagerbund 57 in einer im Gehäusehalsansatz 12 angeordneten, mit einem Lagerflansch 58 versehenen Lagerhülse 59 drehbar gelagert. Auf der dem Lagerflansch 58 entgegengesetzten Oberseite des Lagerbundes 57 ist ein weiterer Gleitring 60 angeordnet, der mittels eines in den Gehäusehalsfortsatz 12 in die Spindeldurchführung 13 eingesetzten und den Spindelansatz 17 umfassenden Dichtungsträger 61 gegen den Lagerbund 57 positioniert wird. Diese Ausbildung der Lageranordnung 15 gewährleistet eine spielfreie, radiale und axiale Lagerung der Schieberspindel 16 im Gehäusehalsforstsatz 12.

Der Dichtungsträger 61 weist in einer Bohrung 62 für den Spindelansatz 17 in zumindest einer umlaufenden Nut 63 einen O-Ring 64 auf, wobei bevorzugt in einer dazu beabstandeten weiteren Nut zur Erhöhung der Sicherheit gegen Leckage ein weiterer O-Ring angeordnet ist. Weiters weist die Dichtanordnung 14 eine bevorzugt durch ebenfalls einer paarweisen Anordnung von O-Ringen 65 zwischen einem Außenumfang 66 des Dichtungsträgers 61 und einer Aufnahmebohrung 67 des Gehäusehalsfortsatzes 12 ausgebildete Abdichtung zur Verhinderung des Austritts des auf einem Druckniveau befindlichen Mediums auf. Eine dem Dichtungsträger 61 zugewandte innere Oberfläche 68 der Aufnahmebohrung 67 wie auch eine die Lagerhülse 59 aufnehmende Lagerbohrung 69 verlaufen von einer Stirnfläche 70 des Gehäusehalsfortsatzes 12 in Richtung der Schieberkammer 11 entsprechend einer Oberfläche eines Kegelmantels, dessen Mantellinien in Richtung der Schieberkammer 11 zusammenlaufen. Dementsprechend ist auch der Dichtungsträger 61 mit einer kegelstumpfförmigen Oberfläche zumindest im Bereich eines Dichtungsansatzes ausgebildet.

Dadurch wird bei einer einstückigen Ausbildung des Armaturengehäuses 3 eine geringste Fertigungstoleranzen aufweisende Gussausbildung erreicht, durch die nachträgliche, aufwendige Fertigungsvorgänge, wie z.B. ein spanabhebender Drehvorgang im Bereich der Spindeldurchführung 13 hinfällig, wodurch wesentliche Kosteneinsparungen aber auch höchste Qualität an Dichtheit und Tauschbarkeit der Teile erreicht wird.

Zur axialen Fixierung des Dichtungsträgers 61 ist weiters bevorzugt den Spindelansatz 17 umfassend in einer ringförmigen Ausnehmung 71 des Gehäusehalsfortsatzes 12 und den Dichtungsträger 61 mit Stützflächen 72 umfassend ein Halsring 73 vorgesehen, der z.B. über eine Rastanordnung 74, gebildet, durch hackenförmige Federarme 75 in Rastaufnahmen 76 des Gehäusehalsfortsatzes 12, verrastet ist.

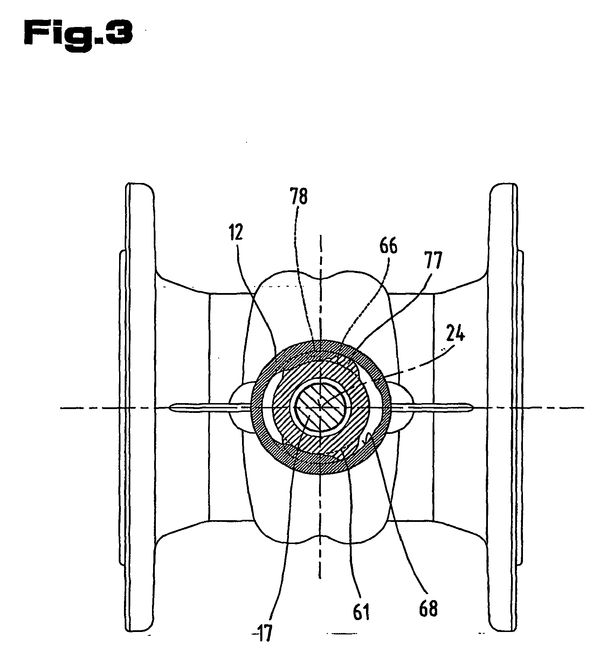

Eine bevorzugte Ausbildung des Dichtungsträgers 61 und der Aufnahme 68 ist in der Fig. 3 dargestellt. Gemäß dieser Ausbildung weist der Dichtungsträger 61 im bezug auf die Längsmittelachse 24 diametral gegenüberliegende, den Außenumfang 66 überragende Verriegelungselemente 77 auf. Die Aufnahme 68 für den Dichtungsträger 61 weist zur Aufnahme der Verriegelungselemente 77 diesen in einer Verriegelungsstellung zugewandte Aufnahmenuten 78 auf Die Verriegelungselemente 77 wie auch die Aufnahmenuten 78 erstrecken sich jeweils etwa auf ein Viertel eines Kreisumfanges des Außenumfanges 66 des Dichtungsträgers 61 sowie der Aufnahme 68 im Gehäusehalsfortsatz 12. Damit wird eine bajonettartige Verriegelung des Dichtungsträgers 61 im Gehäusehalsfortsatz 12 und eine Positionierung erreicht, bei der die O-Ringe 65 der Dichtungsanordnung 14 in folge der Konizität der Aufnahme 68 vorgespannt sind.

Dargestellt ist der Dichtungsträger 61 in seiner im Gehäusehalsfortsatz 12 verriegelten Stellung. Zum Einführen des Dichtungsträgers 61 bei der Montage bzw. zum Entnehmen z.B. für Wartungsarbeiten, insbesondere um einen Austausch der O-Ringe vorzunehmen, wird dieser aus der gezeigten Stellung in eine um 90 °C verschwenkte Stellung gedreht, wobei die Verriegelungselemente 77 außer Eingriff mit den Aufnahmenuten 78 gelangen und damit der Dichtungsträger 61 aus der Aufnahmebohrungen 67 entnommen werden kann. Der Einbau erfolgt entgegengesetzter Manipulation.

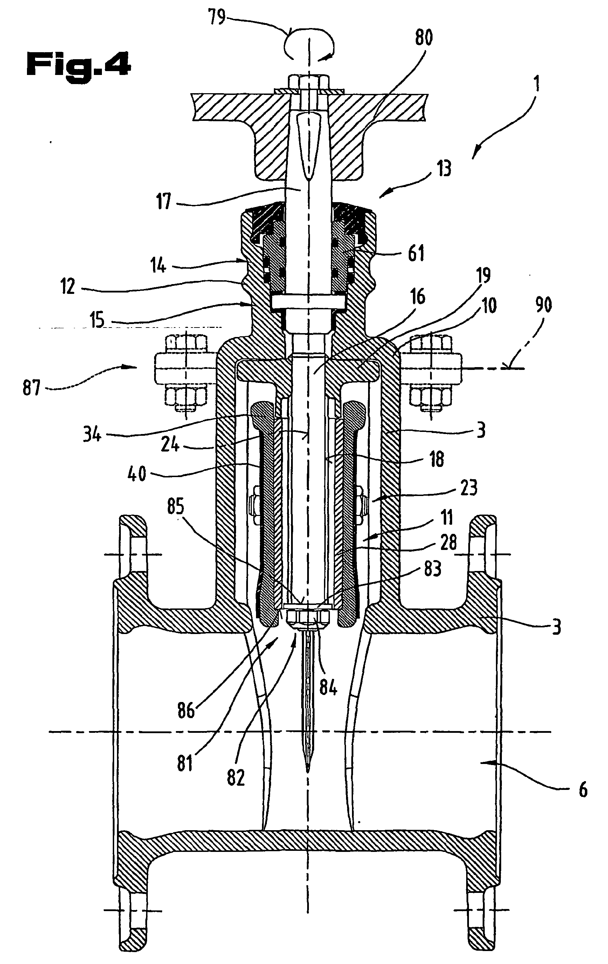

In der Fig. 4 ist die Absperrarmatur 1 mit dem Absperrelement 23 in seiner, dem Strömungskanal 6 freigebenden Stellung, bei der sich das Absperrelement 23 zur Gänze in der Schieberkammer 11 befindet, gezeigt. Dabei durchragt die Schieberspindel 16 im Bereich des Außengewindes 18 den Grundkörper 28 des Absperrelementes 23 zur Gänze nach einer linearen Verstellung der Spindelmutter 19 bei einer Öffnungsbetätigung der Schieberspindel 16 am Spindelansatz 17, gemäß einem Pfeil 79. Eine derartige Betätigung kann über ein unmittelbar am Spindelansatz 17 angreifendes Handrad 80 aber auch bei einer automatisierten Absperrarmatur 1 mittels motorischem Antrieb, z.B. Elektroantrieb, Druckluftantrieb etc., vorgenommen werden.

Zur Begrenzung eines Verstellweges ist beispielsweise zwischen der Schieberspindel 16 und dem Absperrelement 23 eine Anschlaganordnung 81 ausgebildet, z.B. durch eine in einem Endbereich 82 der Schieberspindel 16 angeordnete Anschlagscheibe 83, die auf der Schieberspindel 16 mittels einer Befestigungsmutter 84 fixiert ist und die eine zur Längsmittelachse 24 senkrecht verlaufende Anschlagebene 85 für eine Unterseite 86 des Grundkörpers 28 ausbildet. Damit wird ein verlässlicher Endanschlag in Schließstellung des Absperrelementes 23 erreicht.

Weiters ist in der Fig. 4 eine mögliche Variante zur Ausbildung des Armaturengehäuses 3 in strichlierten Linien gezeigt. Nach dieser Ausführungsvariante ist der die Spindeldurchführung 13 mit der Dichtanordnung 14 und der Lageranordnung 15 ausbildende Gehäusehalsfortsatz 12 auf dem die Schieberkammer 11 ausbildenden Gehäuseaufsatz 10 zur Erzielung eines mehrteiligen Gehäuses mittels einer Flanschanordnung 87 befestigt

Die erfindungsgemäße Ausbildung der Absperrarmatur 1 ermöglicht durch die Wahl der unterschiedlichsten Materialien für das Armaturengehäuse 3, Absperrelement 23 mit dem Grundkörper 28, den Stützscheiben 40, den Dichtelementen 34 sowie der Schieberspindel 16 und dem Dichtungsträger 61 sowie der Dichtanordnung 14 und der Lageranordnung 15, dessen Anwendung für Medien aller Art bis hin zu hoch aggressiven Medien und für Unterdruck bis in den Hochdruckbereich und für einen weiten Temperaturbereich, z.B. zwischen minus 50° bis plus 300°C.

Weiters zeichnet sich die erfindungsgemäße Absperrarmatur 1 durch den modulartigen Aufbau des Absperrelementes 23 aus wodurch Montage und Fertigung der Komponenten vereinfacht und bei hoher Fertigungsqualität ein Kostenvorteil erreicht wird, das besonders Vorteile bei einer Serienfertigung bringt.

Die Vereinfachung bei der Montage wird dadurch erzielt, dass die das Absperrelement 23 bildenden Komponenten, wie Grundkörper 28, Dichtelemente 34, Stützscheiben 40 und die erforderlichen Befestigungsmittel 41 durch den Strömungskanal 6 zugeführt und ohne aufwendige Montagehilfsmittel montierbar sind. Dieser Umstand ermöglicht auch eine einfache Wartung oder Instandhaltung, da es einfach möglich ist, Komponenten auszutauschen.

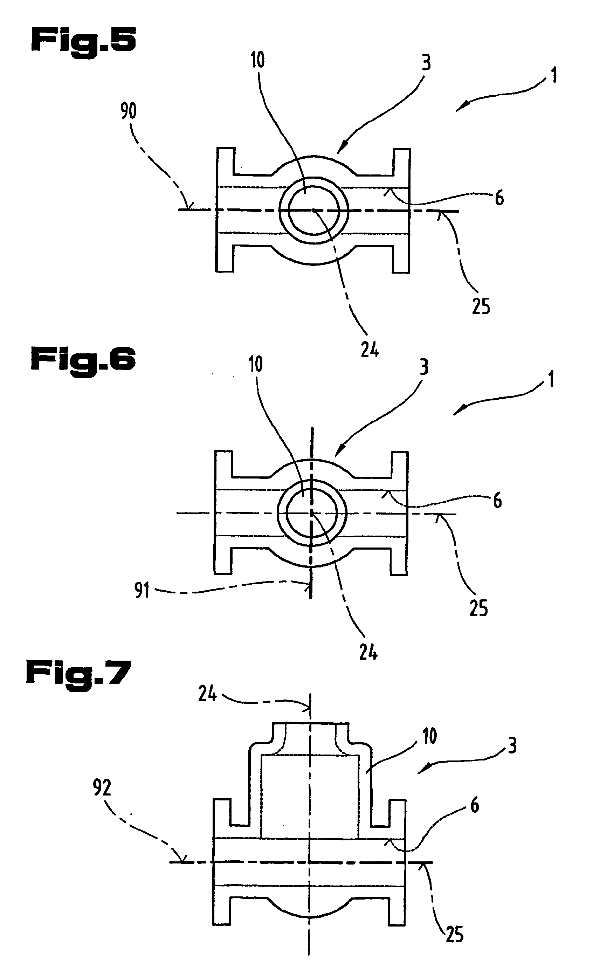

In den Fig. 5 bis 7 sind vereinfacht Teilungsmöglichkeiten zur Ausbildung mehrteiliger Armaturengehäuse 3 dargestellt. Für die Verbindung der das Armaturengehäuse 3 bildendenden Gehäuseteilen sind zur Vereinfachung der Darstellung aus dem Stand der Technik bekannte Möglichkeiten, wie insbesondere Verbindungsflansche, etc. nicht dargestellt.

In der Fig. 6 ist eine Teilung des Armaturengehäuses 3 in einer Teilungsebene 91 gezeigt, in der die Längsmittelachse 24 des Gehäuseaufsatzes 10 verläuft und die senkrecht zur Mittelachse 25 des Strömungskanals 6 ausgerichtet ist.

In der Fig. 5 ist zur Bildung eines mehrteiligen Armaturengehäuses 3 eine Teilung in einer Teilungsebene 90 dargestellt, in der die Längsmittelachse 24 des Gehäuseaufsatzes 10 und die Mittelachse 25 des Strömungskanals 6 verlaufen.

In der Fig. 7 ist eine Teilung des Armaturengehäuses 3 gezeigt, wobei in dieser Teilungsebene 92 die Mittelachse 25 des Strömungskanals 6 verläuft und die senkrecht zur Längsmittelachse 24 des Gehäuseaufsatzes 10 ausgerichtet ist.

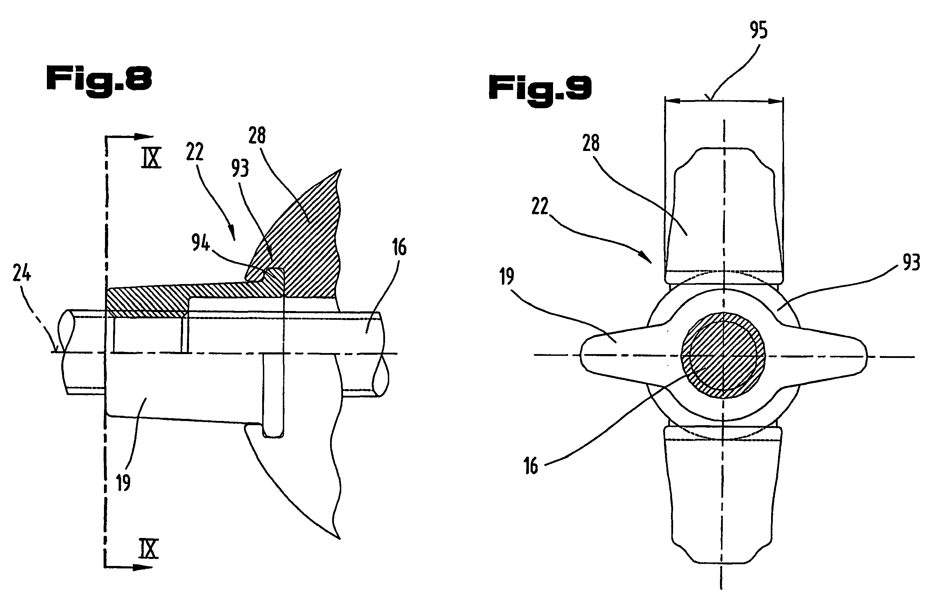

In den Fig. 8 und 9 ist eine andere Ausbildung der Kupplungsanordnung 22 zwischen dem Grundkörper 28 und der Spindelmutter 19 gezeigt. Gemäß dieser Ausführung weist die Spindelmutter 19 an einem dem Grundkörper 28 zugewandten Endbereich 93 einen umlaufenden Bund 94 auf. Der Grundkörper 28 ist mit einer über eine gesamte Dicke 95 verlaufenden Kupplungsaufnahme 96 versehen, die durch ihre Ausbildung den Bund 94 bereichsweise überlappt und damit eine Bewegungsverbindung zwischen der Spindelmutter 19 und dem Grundkörper 28 zur Verstellung des Grundkörpers 28 längs der Längsmittelachse 24 der Schieberspindel 16 erreicht wird, ohne dass ein Drehmoment von der Spindelmutter 19 auf den Grundkörper 28 übertragen wird.

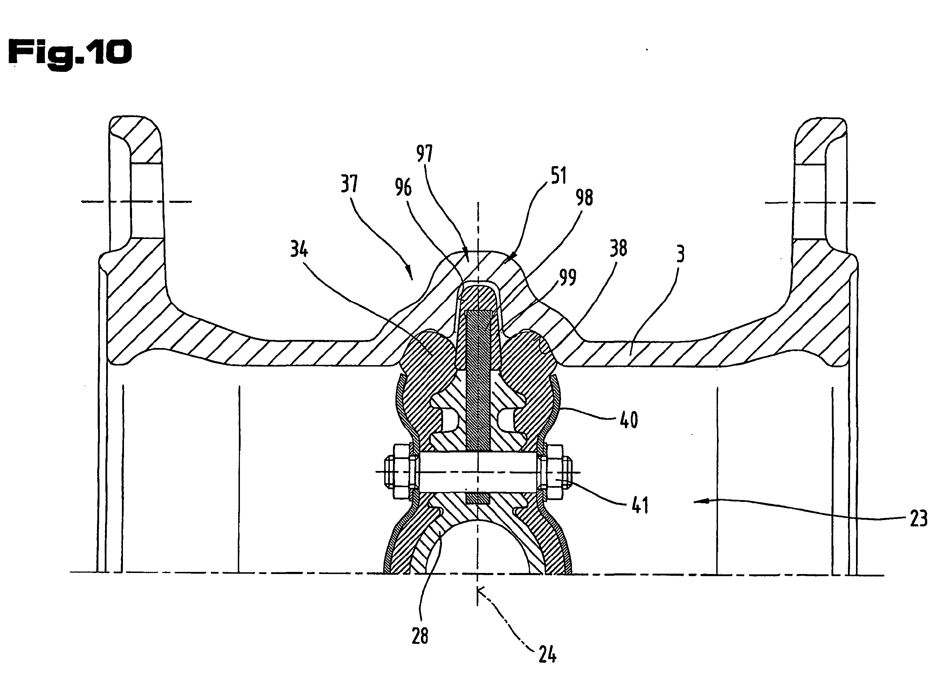

In der Fig. 10 ist eine weitere Ausführung der Führungsanordnung 51 im Armaturengehäuse 3 für das Absperrelement 23 gezeigt, wobei in der Darstellung nur ein Halbschnitt wiedergegeben ist. Nach dieser Ausbildung sind in der Gehäuseausformung 37 zur Längsmittelachse 24 diametral gegenüberliegend und parallel verlaufend Führungsnuten 96 etwa im Mittel zwischen den Dichtflächen 38 vorgesehen. Im Grundkörper 28 sind diesen seitlich überragend und in die Führungsnuten 96 einragende Führungselemente 97 befestigt. Bevorzugt sind die Führungselemente 97 mehrstückig und bestehen aus einem im Grundkörper 28 mittels der Befestigungsmittel 41 für die Dichtelemente 34 und Stützscheiben 40 mitbefestigten Führungstragteil 98, welcher zur Kraftableitung ausgelegt ist und einem auf diesem befestigten Gleitelement 99, z.B. aus einem Material mit geringem Reibwert, um eine leichtgängige Verstellung des Absperrelementes 23 in der Führungsanordnung 51 zu erreichen.

Zurückkommend auf Fig. 2 sei noch erwähnt, dass eine weitere vorteilhafte Ausgestaltung der erfindungsgemäßen Absperrarmatur 1 darin liegt, die an die Dichtflächen 38 im Bereich der Gehäuseausformung 37 zur dichtenden Anlage vorgesehenen Randwülste 35 der Dichtelemente 34 durch eine zum Außenmaß 36 konzentrisch verlaufende Nut zu unterteilen und damit Dichtlippen 100, 101 zu bilden, wodurch insgesamt eine bessere Dichtwirkung erzielt wird aber auch der Vorteil erreicht wird, dass für die Dichtelemente 34 wahlweise auch härteres, widerstandsfähigeres Material mit entsprechend guter Langzeitwirkung zur Anwendung gelangen kann.

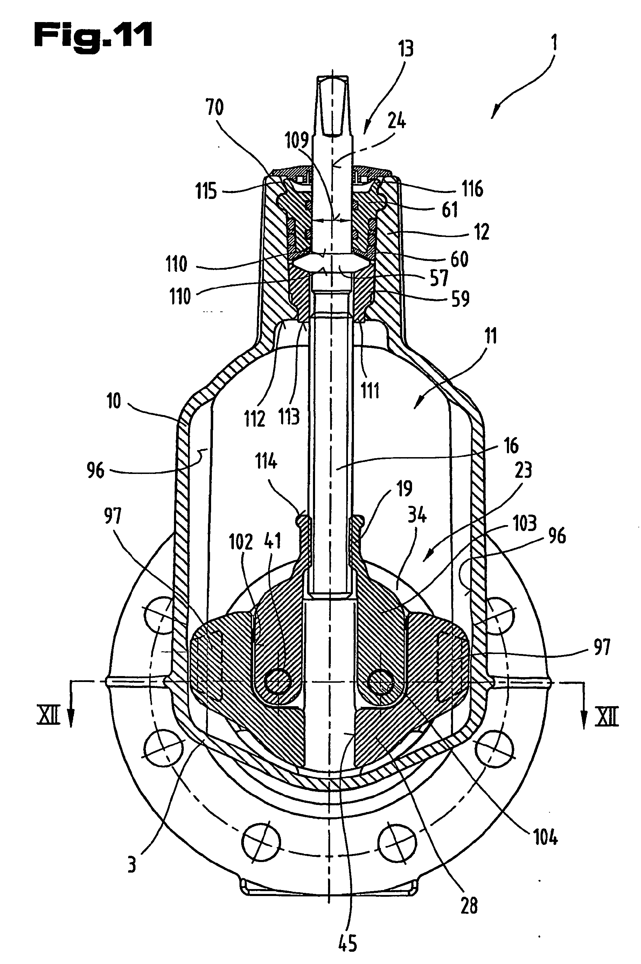

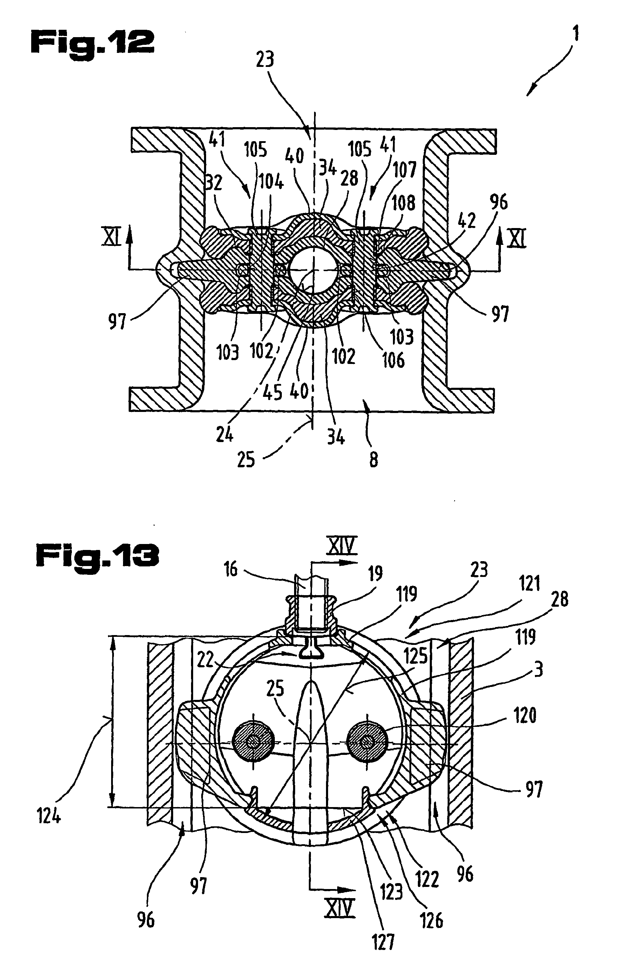

In den Fig. 11 und 12 ist eine andere Ausführung der Absperrarmatur 1 gezeigt. Nach dem in diesen Figuren gezeigten Ausführungsbeispiel ist der Grundkörper 28 des Absperrelements 23 einstückig mit den Führungselementen 94 versehen, mit denen das Absperrelement 23 in den im Armaturengehäuse 3 und im Gehäuseaufsatz 10 angeordneten Führungsnuten 96 linear geführt ist. Weiters weist der Grundkörper 28, ausgehend von der Aufnahmebohrung 45 für die Schieberspindel 16 und symmetrisch zur Längsmittelachse 24, sich über den Bereich der Befestigungsmittel 41 erstreckende, schlitzförmige Aufnahmen 102 auf. In diese ragen mit der Spindelmutter 19 einstückig verbundene Befestigungslaschen 103 die mit Bohrungen 104 versehen sind und mittels der Befestigungsmittel 41 mit dem Grundkörper 28 bewegungsfest verbunden sind. Damit ist eine für die Montage des Sperrelements 23 innerhalb des Armaturengehäuses 3 geeignete Verbindung und Verankerung der Spindelmutter 19 mit dem Absperrelement 23 erreicht.

Das gezeigte Ausführungsbeispiel weist weiters als Verbindungsmittel 41 Nietbolzen 105 auf, mittels der die Komponenten des Absperrelementes 23, bestehend aus dem Grundkörper 28, den auf diesem beidseits aufgebrachten Dichtelementen 34 und die Stützscheiben 40 dauerhaft verbunden sind. Bevorzugt weisen die Dichtelementen 34 Bohrungen 106 zur Durchführung der Nietbolzen 105 umfassende, dem Grundkörper 28 zugewandte Dichtwülste 107 auf, welche in gegengleiche Aufnahmen 108 die im Grundkörper 28 die Bohrung 42 für die Durchführung der Nietbolzen 105 umfassend angeordnet sind, eingreifen und eine Abdichtung im Bereich der Bohrungen 42 für die Befestigungsmittel ergeben.

Wie nun weiters ebenfalls der Fig. 11 zu entnehmen, ist im Bereich der Spindeldurchführung 13 im Gehäusehalsfortsatz 12 die Schieberspindel 16 mit dem Lagerbund 57 versehen, der im gezeigten Ausführungsbeispiel im wesentlichen durch zwei zur Längsmittelachse 24 zueinander in Form gegengleicher Kegelstumpf- Mantelflächen winkelig verlaufende, einen Spindeldurchmesser 109 überragende Ringflächen 110 gebildet ist. Der damit etwa V-förmige Führungsquerschnitt des Lagerbundes 57 gewährleistet in Verbindung mit der in der Spindeldurchführung 13 angeordneten Lagerhülse 59 und dem Gleitring 60, die bevorzugt aus einem hochbeständigem Kunststoff mit für Lagerungszwecke geringem Gleitreibwert bestehen, eine exakte und dauerhafte Lagerung für die Schieberspindel 16. Die Formgebung des Lagerbundes 57 bewirkt mit der angepassten Profilierung der Lagerhülse 59 und dem Gleitring 60 eine einwandfreie radiale wie auch axiale Lagerung der Schieberspindel 16 im Bereich der Spindeldurchführung 13.

Die dem Absperrelement 23 zugewandte Lagerhülse 59 überragt mit einem Ringfortsatz 111 eine der Schieberkammer 11 zugewandte ringförmige Stirnfläche 112 in Richtung des Sperrelements 23 und bildet somit eine Anschlagfläche 113 für eine dieser zugewandten ringförmigen Stirnfläche 114 der Spindelmutter 19, womit der Verstellweg des Sperrelementes 23 in Öffnungsstellung, bei der der Strömungsquerschnitt 8 zur Gänze freigegeben ist, begrenzt wird.

Der im Gehäusehalsfortsatz 12 mittels der bereits in den vorhergehenden Figuren beschriebenen Bajonettverrastung eingesetzte Dichtungsträger 61 weist im Bereich der Stirnfläche 70 des Gehäusehalsfortsatzes 12 zumindest zwei zur Längsmittelachse 24 diametral gegenüberliegende, in Kerbeintiefungen 115 eingreifende Bördelnasen 116 auf, durch die einen Verdrehsicherung des Dichtungsträgers 61 in der Bohrung 62 des Gehäusehalsfortsatzes 11 erreicht wird.

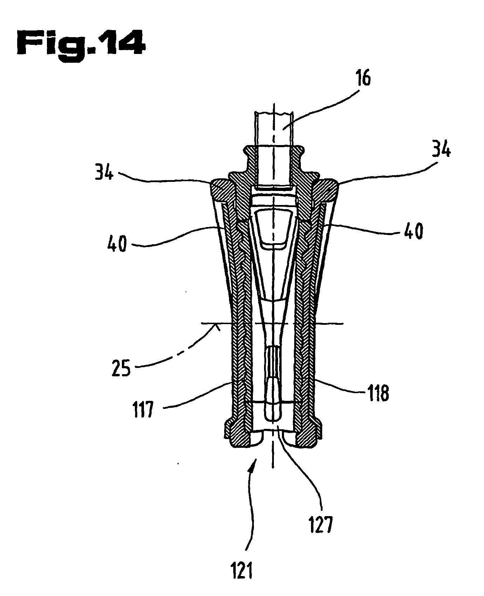

In den Fig. 13 und 14 ist im Detail eine weitere Ausbildung des Absperrelementes 23, insbesondere für Absperrarmaturen 1 mit größerer Nennweite, z.B. über 100 mm, gezeigt. Bei dieser Ausbildung ist der Grundkörper 28 im wesentlichen durch zwei voneinander distanzierte, geformte Wandscheiben 117, 118 zur Aufnahme der Dichtelemente 34 und der Stützscheiben 40 gebildet wobei die Wandscheiben 117, 118 über bereichsweise angeordnete Wandteile 119 und Distanzhülsen 120 insgesamt einen Hohlkörper 121 bilden. Bevorzugt bilden die Wandscheiben 117, 118 mit den Wandteilen 119 und Distanzhülsen 120 und den seitlich abstehenden Führungselementen 97 einen einstückigen Bauteil.

In einem der Kupplungsanordnung 22 zwischen der Spindelmutter 19 und dem Grundkörper 28 entgegengesetztem Endbereich 122 ist der Grundkörper 28 mit einer Abflachung 123 versehen, wodurch eine Höhe 124 kleiner ist, als ein Durchmesser 125 eines theoretischen Kreisumrisses der Außenkontur des Grundköpers 28.

Durch diese Abflachung 123 wird das Einführen des Grundkörpers 28 in das Armaturengehäuse 3 und insbesondere das Einführen der Führungselemente 97 in die Führungsnuten 96 bei der Montage des Absperrelements 23 innerhalb des Armaturengehäuses 3, wobei ein Verkanten um Längsachse 25 erforderlich ist, wesentlich erleichtert.

Um in dem durch die Abflachung 123 beeinträchtigten Bereich des Grundkörpers 28 die erforderliche Auflage und Abstützung für die Dichtelemente 34 zu gewährleisten, wird dieser Bereich mittels eines über eine Steckverbindung 126 mit dem Grundkörper 28, insbesondere mit den Wandteilen 119, kuppelbares Ausgleichselement 127, den kreisförmigen Umriss des Grundkörpers 28 vervollständigend, vor der Montage der Dichtelemente 34 und Stützscheiben 40 eingesetzt.

Der Ordnung halber sei abschließend darauf hingewiesen, dass zum besseren Verständnis des Aufbaus der Absperrarmatur 1 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1, 2, 3, 4; 5; 6; 7; 8, 9; 10; 11, 12; 13, 14 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Absperrarmatur
- 2: Schieberarmatur
- 3: Armaturengehäuse
- 4: Anschlussarmatur
- 5: Anschlussflansche

- 6: Strömungskanal
- 7: Pfeil
- 8: Strömungsquerschnitt
- 9: Nennweite
- 10: Gehäuseaufsatz

- 11: Schieberkammer
- 12: Gehäusehalsfortsatz
- 13: Spindeldurchführung
- 14: Dichtanordnung
- 15: Lageranordnung

- 16: Schieberspindel
- 17: Spindelansatz
- 18: Außengewinde
- 19: Spindelmutter
- 20: Bohrung

- 21: Innengewinde
- 22: Kupplungsanordnung
- 23: Absperrelement
- 24: Längsmittelachse
- 25: Mittelachse

- 26: Länge
- 27: Bauhöhe
- 28: Grundkörper
- 29: Außenabmessung
- 30: Kupplungsnut

- 31: Kupplungsmittel
- 32: Stützfläche
- 33: Rippe
- 34: Dichtelement
- 35: Randwulst

- 36: Außenmaß
- 37: Gehäuseausformung
- 38: Dichtfläche
- 39: Stirnfläche
- 40: Stützscheiben

- 41: Befestigungsmittel
- 42: Bohrung
- 43: Gewindebolzen
- 44: Gewindemutter
- 45: Aufnahmebohrung

- 46: Innendurchmesser
- 47: Gewindeaußendurchmesser
- 48: Distanz
- 49: Führungssteg
- 50: Führungselement

- 51: Führungsanordnung
- 52: Weite
- 53: Ausnehmung
- 54: Führungsblech
- 55: Doppelpfeil

- 56: Führungen
- 57: Lagerbund
- 58: Lagerflansch
- 59: Lagerhülse
- 60: Gleitring

- 61: Dichtungsträger
- 62: Bohrung
- 63: Nuten
- 64: O-Ring
- 65: O-Ring

- 66: Außenumfang
- 67: Aufnahmebohrung
- 68: Oberfläche
- 69: Lagerbohrung
- 70: Stirnfläche

- 71: Ausnehmung
- 72: Stützfläche
- 73: Halsring
- 74: Rastanordnung
- 75: Federarme

- 76: Rastaufnahme
- 77: Verriegelungselement
- 78: Aufnahmenuten
- 79: Pfeil
- 80: Handrad

- 81: Anschlaganordnung
- 82: Endbereich
- 83: Anschlagscheibe
- 84: Befestigungsmutter
- 85: Anschlagebene

- 86: Unterseite
- 87: Flanschanordnung
- 88:
- 89:
- 90: Teilungsebene

- 91: Teilungsebene
- 92: Teilungsebene
- 93: Endbereich
- 94: Bund
- 95: Dicke

- 96: Führungsnut
- 97: Führungselement
- 98: Führungstragteil
- 99: Gleitelement
- 100: Dichtlippe

- 101: Dichtlippe
- 102: Aufnahme
- 103: Befestigungslasche
- 104: Bohrung
- 105: Nutbolzen

- 106: Bohrung
- 107: Dichtwulst
- 108: Aufnahme
- 109: Spindeldurchmesser
- 110: Ringfläche

- 111: Ringfortsatz
- 112: Stirnfläche
- 113: Anschlagfläche
- 114: Stirnfläche
- 115: Kerbeintiefung

- 116: Bördelnase
- 117: Wandscheibe
- 118: Wandscheibe
- 119: Wandteil
- 120: Distanzhülsen

- 121: Hohlkörper
- 122: Endbereich
- 123: Abflachung
- 124: Höhe
- 125: Durchmesser

- 126: Stückverbindung
- 127: Ausgleichselement

## Patentansprüche

1. Absperrarmatur (1) für ein Strömungsmedium, insbesondere für beidseitige Druckbeaufschlagung ausgebildete Schieberarmatur (2) mit einem einen Strömungskanal (6) und eine Schieberkammer (11) ausbildenden Armaturengehäuse (3) und mit einem den Strömungskanal (6) sperrbaren, weichdichtenden, mehrteilig ausgebildeten, Absperrelement (23) und mit einer eine Dichtanordnung (14) und/oder Lageranordnung (15) in einem die Schieberkammer (11) begrenzenden Gehäusehalsfortsatz (12) durchragenden und mit einer mit dem Absperrelement (23) gekuppelten Spindelmutter (19) über Gewindeeingriff drehverbundenen Schieberspindel (16) und mit einem mit Dichtelementen (34) versehenen Grundkörper (28) mit zumindest einer Außenabmessung (29) geringfügig kleiner als eine Nennweite (9) des Strömungskanals (6), **dadurch gekennzeichnet, dass** an entgegengesetzten Stützflächen (32) des scheibenförmig ausgebildeten Grundkörpers (28) dessen Oberflächen überragend Rippen (33) zur Bildung einer Struktur, zur formschlüssigen Anlage der mit einer gegengleich ausgebildeten Struktur versehenen Dichtelemente (34), angeordnet sind, und die Dichtelemente (34) am Grundkörper (28) durch, auf entgegengesetzten Stirnflächen (39) der Dichtelemente (34) angeordneten Stützscheiben (40), mittels die Stützscheiben (40), Dichtelemente (34) und den Grundkörper (28) in Bohrungen (42) querenden Befestigungsmitteln (41) befestigt sind.

2. Absperrarmatur nach Anspruch 1, **dadurch gekennzeichnet, dass** in dem Gehäusehalsfortsatz (12) die Dicht- und/oder Lageranordnung (14, 15) aufnehmende, konzentrisch zu einer Längsmittelachse (24) der Schieberspindel (16) verlaufende Dichtflächen (38) angeordnet sind, die von einer Basis des Gehäusehalsfortsatzes (12) in Richtung einer Stirnfläche (70) des Gehäusehalsfortsatzes (12) konisch erweiternd ausgebildet sind.

3. Absperrarmatur nach Anspruch 1 oder 2, **dadurch gekennzeichnet, dass** das Armaturengehäuse (3) mit dem Gehäusehalsfortsatz (12) einstückig ausgebildet ist

4. Absperrarmatur nach Anspruch 1 oder 2, **dadurch gekennzeichnet, dass** das Armaturengehäuse (3) mit dem Gehäusehalsfortsatz (12) mehrstückig ausgebildet ist.

5. Absperrarmatur nach einem oder mehreren der vorhergehenden Ansprüche, **dadurch gekennzeichnet, dass** das Armaturengehäuse (3) im Bereich der Schieberkammer (11) in einer zur Längsmittelachse (24) der Schieberspindel (16) senkrecht verlaufende Ebene geteilt ausgebildet ist.

6. Absperrarmatur nach Anspruch 4, **dadurch gekennzeichnet, dass** das Armaturengehäuse (3) in einer die Längsmittelachse (24) der Schieberspindel (16) und eine Mittelachse (25) des Strömungskanals (6) aufnehmenden Teilungsebene (90) geteilt ausgebildet ist

7. Absperrarmatur nach Anspruch 4, **dadurch gekennzeichnet, dass** das Armaturengehäuse (3) in einer die Längsmittelachse (24) aufnehmenden und zur Mittelachse (25) senkrecht verlaufenden Teilungsebene (91) geteilt ausgebildet ist.

8. Absperrarmatur nach Anspruch 4, **dadurch gekennzeichnet, dass** das Armaturengehäuse (3) in einer die Mittelachse (25) aufnehmenden und zur Längsmittelachse (24) senkrecht verlaufenden Teilungsebene (92) geteilt ausgebildet ist.

9. Abspemarmatur nach einem oder mehreren der vorhergehenden Ansprüche, **dadurch gekennzeichnet, dass** die Gehäuseteile des Armaturengehäuses (3) über eine im Bereich einer Teilungsebene (90, 91, 92) ausgebildete Flanschanordnung (87) lösbar verbunden sind.

10. Absperrarnnatur nach einem oder mehreren der vorhergehenden Ansprüche, **dadurch gekennzeichnet, dass** in der Schieberkammer (11) parallel zur Längsmittelachse (24) verlaufende Führungen (56) zur Verdrehsicherung für die Spindelmutter (19) angeordnet sind.

11. Absperrarmatur nach Anspruch 10, **dadurch gekennzeichnet, dass** die Führungen (56) durch, im bezug auf die Längsmittelachse (24), diametral gegenüberliegende, nutenförmige Vertiefungen in der Schieberkammer (11) des Armaturengehäuses (3) ausgebildet sind.

12. Absperrarmatur nach Anspruch 10, **dadurch gekennzeichnet, dass** die Führungen (56) durch, in bezug auf die Längsmittelachse (24) diametral gegenüberliegende Führungsleisten in der Schieberkammer (11) des Armaturengehäuses (3) ausgebildet sind.

13. Absperrarmatur nach einem oder mehreren der vorhergehenden Ansprüche, **dadurch gekennzeichnet, dass** die Spindelmutter (19) über, im bezug auf die Längsmittelachse (24), diametral gegenüberliegenden Führungsfortsätzen in den nuten- oder leistenförmigen Führungen (56) verdrehgesichert gelagert ist.

14. Absperrarmatur nach einem oder mehreren der vorhergehenden Ansprüche, **dadurch gekennzeichnet, dass** die Spindelmutter (19) mit zur Längsmittelachse (24) diametral gegenüberliegenden, in Kupplungsnuten (30) des Grundkörpers (28) eingreifenden Kupplungsmittel (31) versehen ist.

15. Absperrarmatur nach einem oder mehreren der vorhergehenden Ansprüche, **dadurch gekennzeichnet, dass** in einer der Sperrstellung entsprechenden Endstellung der Spindelmutter (19) die Kupplungsmittel (31) die Schieberkammer (11) in Richtung des Strömungskanals (6) überragen.

16. Absperrarmatur nach einem oder mehreren der vorhergehenden Ansprüche, **dadurch gekennzeichnet, dass** der Grundkörper (28) scheibenförmig ausgebildet ist und in Richtung einer Außenabmessung (29) von einer die Schieberspindel (16) aufnehmenden Aufnahmebohrung (45) durchragt wird.

17. Absperrarmatur nach einem oder mehreren der vorhergehenden Ansprüche, **dadurch gekennzeichnet, dass** der Grundkörper (28) als Hohlkörper (121) oder über Wandteile (119) und Distanzhülsen (120) verbundenen Wandscheiben (117, 118) gebildet ist.

18. Absperrarmatur nach einem oder mehreren der vorhergehenden Ansprüche, **dadurch gekennzeichnet, dass** der Grundkörper mit zumindest einer Abflachung (123) versehen ist die in einer zur Längsmittelachse (24) senkrecht verlaufenden Ebene ausgebildet ist.

19. Absperrarmatur nach einem oder mehreren der vorhergehenden Ansprüche, **dadurch gekennzeichnet, dass** im Bereich der Abflachung (123) im Grundkörper (28) ein bevorzugt über eine Steckverbindung (126) befestigtes Ausgleichselement (127) angeordnet ist.

20. Absperrarmatur nach einem oder mehreren der vorhergehenden Ansprüche, **dadurch gekennzeichnet, dass** der Grundkörper (28) in einer zu einer Verstellrichtung linear erstreckenden Führungsanordnung (51) im Armaturengehäuse (3) verdrehgesichert gelagert ist.

21. Absperrarmatur nach einem oder mehreren der vorhergehenden Ansprüche, **dadurch gekennzeichnet, dass** die Führungsanordnung (51) durch einen Außenumriss des Grundkörpers (28) seitlich überragende Führungselemente (50, 97) und im Armaturengehäuse (3) parallel zur Längsmittelachse (24) verlaufende, diametral gegenüberliegende Führungsstege (49) gebildet ist.

22. Absperrarmatur nach einem oder mehreren der vorhergehenden Ansprüche, **dadurch gekennzeichnet, dass** die Führungsstege (49) im Bereich von Gehäuseausformungen (37) außerhalb eines Strömungsquerschnittes (8) des Strömungskanals (9) angeordnet sind.

23. Absperrarmatur nach Anspruch 20, **dadurch gekennzeichnet, dass** die Führungsanordnung (51) im Armaturengehäuse (3) für die den Grundkörper (28) seitlich überragenden Führungselemente (50, 97) durch parallel zur Längsmittelachse (24) verlaufende, diametral gegenüberliegende Führungsstege (49) oder Führungsnuten (96) gebildet ist.

24. Absperrarmatur nach einem oder mehreren der vorhergehenden Ansprüche, **dadurch gekennzeichnet, dass** die mit den Führungsstegen (49) oder Führungsnuten (96) zusammenwirkenden Führungselemente (50, 97) im Grundkörper (28) befestigt sind.

25. Absperrarmatur nach einem oder mehreren der vorhergehenden Ansprüche, **dadurch gekennzeichnet, dass** die Führungselemente (50, 97) einstückig mit dem Grundkörper (28) verbunden sind.

26. Absperrarmatur nach einem oder mehreren der vorhergehenden Ansprüche, **dadurch gekennzeichnet, dass** die Dichtelemente (34) mit den Stützscheiben (40) und den Führungselementen (50) bevorzugt durch in einer zur Längsmittelachse (24) senkrecht verlaufenden Grundkörpermittelebene angeordnete Befestigungsmittel (41), z.B. Distanzverschraubung, mit dem Grundkörper (28) verbunden sind.

27. Absperrarmatur nach einem oder mehreren der vorhergehenden Ansprüche, **dadurch gekennzeichnet, dass** die Dichtelemente (34) von den Befestigungsmitteln (41) in Bohrungen (42) durchragt werden, wobei die Bohrungen (42) mit den Befestigungsmitteln (41) druckdicht ausgebildet sind.

28. Absperrarmatur nach einem oder mehreren der vorhergehenden Ansprüche, **dadurch gekennzeichnet, dass** die Bohrung (42) umfassend am Dichtelement (34) ein Dichtwulst (107) angeordnet ist.

29. Absperrarmatur nach einem oder mehreren der vorhergehenden Ansprüche, **dadurch gekennzeichnet, dass** zur Aufnahme der Dichtwulst (107) im Grundkörper (28) die Bohrung (42) umfassend eine Aufnahme (108) für die Dichtwulst (107) angeordnet ist.

30. Absperrarmatur nach einem oder mehreren der vorhergehenden Ansprüche, **dadurch gekennzeichnet, dass** die Dichtanordnung (14) für die Schieberspindel (16) im Gehäusehalsfortsatz (12) einen, einen Innen- und Außendichtsatz, z.B. O-Ringe (64,65) aufweisenden, einen Spindelansatz (17) umfassenden Dichtungsträger (61) aufweist.

31. Absperrarmatur nach einem oder mehreren der vorhergehenden Ansprüche, **dadurch gekennzeichnet, dass** der Innen- und Außendichtsatz bevorzugt durch eine paarweise Anordnung von O-Ringen (64, 65) gebildet ist.

32. Absperrarmatur nach einem oder mehreren der vorhergehenden Ansprüche, **dadurch gekennzeichnet, dass** der Dichtungsträger (61) im Gehäusehalsfortsatz (12) mittels einer Bajonett-Verriegelungsvorrichtung positioniert ist.

33. Absperrarmatur nach einem oder mehreren der vorhergehenden Ansprüche, **dadurch gekennzeichnet, dass** ein den Außen-Dichtsatz aufnehmender Fortsatz des Dichtungsträgers (61) einen konisch verlaufenden Dichtansatz ausbildet

34. Absperrarmatur nach einem oder mehreren der vorhergehenden Ansprüche, **dadurch gekennzeichnet, dass** die Bajonett-Verrieglungsvorrichtung des Dichtungsträgers (61) im Gehäusehalsfortsatz (12) durch diametral einen Außendurchmesser des Dichtungsträgers (61) überragende Verriegelungselemente (77) und den Verriegelungselementen (77) in einer Aufnahmebohrung (67) des Gehäusehalsfortsatzes (12) zugeordneten Aufnahmenuten (78) gebildet ist.

35. Absperrarmatur nach einem oder mehreren der vorhergehenden Ansprüche, **dadurch gekennzeichnet, dass** der Dichtungsträger (61) im Gehäusehalsfortsatz (12) durch zumindest eine Bördelnase (116) verdrehgesichert ist.

36. Absperrarmatur nach einem oder mehreren der vorhergehenden Ansprüche, **dadurch gekennzeichnet, dass** im Gehäusehalsfortsatz (12) eine Lageranordnung (15) für die drehbare Lagerung der Schieberspindel (16) angeordnet ist.

37. Absperrarmatur nach einem oder mehreren der vorhergehenden Ansprüche, **dadurch gekennzeichnet, dass** die Schieberspindel (16) im Bereich der Lageranordnung (15) bevorzugt einen Lagerbund (57) aufweist.

38. Absperrarmatur nach einem oder mehreren der vorhergehenden Ansprüche, **dadurch gekennzeichnet, dass** der Lagerbund (57) durch einen einen Spindeldurchmesser (109) überragenden Ringwulst mit Dreieckquerschnitt gebildet ist.

39. Absperrarmatur nach einem oder mehreren der vorhergehenden Ansprüche, **dadurch gekennzeichnet, dass** in der Aufnahmebohrung (67) des Gehäusehalsfortsatzes (12) für die Spindeldurchführung (13) eine mit einem Lagerflansch (58) zur Auflagerung des Lagerbundes (57) versehene Lagerhülse (59) angeordnet ist.

40. Absperrarmatur nach einem oder mehreren der vorhergehenden Ansprüche, **dadurch gekennzeichnet, dass** zwischen dem Lagerbund (57) und dem Dichtungsträger (61) ein Gleitring (60) angeordnet ist.

41. Absperrarmatur nach einem oder mehreren der vorhergehenden Ansprüche, **dadurch gekennzeichnet, dass** Lagermittel der Lageranordnung (15) für die Schieberspindel (16) durch eine an Lagerstellen im Gehäusehalsfortsatz (12) aufgebrachte Lagerungsschichte gebildet ist.

42. Absperrarmatur nach einem oder mehreren der vorhergehenden Ansprüche, **dadurch gekennzeichnet, dass** im Stirnendbereich des Gehäusehalsfortsatzes (12) den Spindelansatz (17) umfassend ein über Federarme (75) im Gehäusehalsfortsatz (12) fixierte, vom Spindelansatz (17) durchragter Halsring (73) angeordnet ist.

43. Absperrarmatur nach einem oder mehreren der vorhergehenden Ansprüche, **dadurch gekennzeichnet, dass** der Grundkörper (28) des Absperrelementes (23) aus Metall, Kunststoff oder aus hochtemperaturbeständigen und/oder gegen aggressive Medien beständigen Materialien besteht.

44. Absperrarmatur nach einem oder mehreren der vorhergehenden Ansprüche, **dadurch gekennzeichnet, dass** das Dichtelement (34) aus Elastomeren, Kunststoff oder aus hochtemperaturbeständigen und/oder gegen aggressive Medien beständigen Materialien besteht.

45. Absperrarmatur nach einem oder mehreren der vorhergehenden Ansprüche, **dadurch gekennzeichnet, dass** die Stützscheibe (40) aus Metall, Kunststoff oder aus hochtemperaturbeständigen und/oder gegen aggressive Medien beständigen Materialien besteht.

46. Absperrarmatur nach einem oder mehreren der vorhergehenden Ansprüche, **dadurch gekennzeichnet, dass** die Spindelmutter (19) aus Metall, Kunststoff oder aus hochtemperaturbeständigen und/oder aggressive Medien beständigen Materialien besteht.

47. Absperrarmatur nach einem oder mehreren der vorhergehenden Ansprüche, **dadurch gekennzeichnet, dass** die Schieberspindel (16) aus Metall, Kunststoff oder aus hochtemperaturbeständigen und/oder aggressive Medien beständigen Materialien besteht.

48. Absperrarmatur nach einem oder mehreren der vorhergehenden Ansprüche, **dadurch gekennzeichnet, dass** der Dichtungsträger (61) aus Metall, Kunststoff oder aus hochtemperaturbeständigen und/oder aggressive Medien beständigen Materialien besteht.

49. Absperrarmatur nach einem oder mehreren der vorhergehenden Ansprüche, **dadurch gekennzeichnet, dass** das Armaturengehäuse (3) aus Metall, Kunststoff oder aus hochtemperaturbeständigen und/oder aggressive Medien beständigen Materialien besteht.

50. Absperrarmatur nach einem oder mehreren der vorhergehenden Ansprüche, **dadurch gekennzeichnet, dass** die Sperrstellung des Absperrelements (23), bei der die Dichtelemente (34) an den Dichtflächen (38) des Armaturengehäuses (3) dichtend anliegen, durch eine zwischen der Schieberspindel (16) und dem Grundkörper (28) des Absperrelementes (23) ausgebildeten Anschlaganordnung (81), insbesondere durch eine im Endbereich der Schieberspindel (16) befestigte Anschlagscheibe (83), die den Verstellweg der Gewindespindel (16) begrenzt, gebildet ist.

51. Absperrarmatur nach einem oder mehreren der vorhergehenden Ansprüche, **dadurch gekennzeichnet, dass** die Randwulst (35) des Dichtelementes (34) mit Dichtlippen (100, 101) ausgeführt ist.

52. Absperrelement (23) für eine Absperrarmatur (1) für ein Strömungsmedium mit einem scheibenförmigen, an entgegengesetzten Stützflächen (32) mit weichdichtenden Dichtelementen (34) versehenen Grundkörper (28) und mit einer den Grundkörper durchragenden Aufnahmebohrung (45) für eine Schieberspindel (16), **dadurch gekennzeichnet, dass** auf den Stützflächen (32) deren Oberflächen überragend Rippen (33) zur Bildung einer Struktur, zur formschlüssigen Anlage der mit einer gegengleich ausgebildeten Struktur versehenen Dichtelemente (34), angeordnet sind, und die Dichtelemente (34) am Grundkörper (28) durch, auf entgegengesetzten Stirnflächen (39) der Dichtelemente (34) angeordneten Stützscheiben (40), mittels die Stützscheiben (40), Dichtelemente (34) und den Grundkörper (28) in Bohrungen (42) querenden Befestigungsmitteln (41) befestigt sind.

53. Absperrelement (23) nach Anspruch 52, **dadurch gekennzeichnet, dass** der Grundkörper (28) als Hohlkörper (121) oder über Wandteile (119) und Distanzhülsen (120) verbundenen Wandscheiben (117, 118) gebildet ist.

54. Absperrelement nach Anspruch 52 oder 53, **dadurch gekennzeichnet, dass** der Grundkörper mit zumindest einer Abflachung (123) versehen ist die in einer zur Längsmittelachse (24) senkrecht verlaufenden Ebene ausgebildet ist.

55. Absperrelement nach einem der Ansprüche 52 bis 54, **dadurch gekennzeichnet, dass** im Bereich der Abflachung (123) im Grundkörper (28) ein bevorzugt über eine Steckverbindung (126) befestigtes Ausgleichselement (127) angeordnet ist

56. Absperrelement nach einem der Ansprüche 52 bis 55, **dadurch gekennzeichnet, dass** der Grundkörper (28) mit Kupplungsnuten (30) zur Aufnahme von Kupplungsmittel (31) einer Spindelmutter (19) versehen ist.

57. Absperrelement nach einem der Ansprüche 52 bis 56, **dadurch gekennzeichnet, dass** der Grundkörper (28) mit einen Außenumriss überragenden Führungselementen (50, 97) versehen ist.

58. Absperrelement nach einem der Ansprüche 52 bis 57, **dadurch gekennzeichnet, dass** die Führungselemente (50, 97) im Grundkörper (28) befestigt sind.

59. Absperrelement nach einem der Ansprüche 52 bis 58, **dadurch gekennzeichnet, dass** die Führungselemente (50, 97) einstückig mit dem Grundkörper (28) verbunden sind.

60. Absperrelement nach einem der Ansprüche 52 bis 59, **dadurch gekennzeichnet, dass** die Dichtelemente (34) mit den Stützscheiben (40) und den Führungselementen (50) bevorzugt durch in einer zur Längsmittelachse (24) senkrecht verlaufenden Grundkörpermittelebene angeordnete Befestigungsmittel (41), z.B. Distanzverschraubung, mit dem Grundkörper (28) verbunden sind.

61. Absperrelement nach einem der Ansprüche 52 bis 60, **dadurch gekennzeichnet, dass** die Dichtelemente (34) von den Befestigungsmitteln (41) in Bohrungen (42) durchragt werden, wobei die Bohrungen (42) mit den Befestigungsmitteln (41) druckdicht ausgebildet Sind.

62. Absperrelement nach einem der Ansprüche 52 bis 61, **dadurch gekennzeichnet, dass** die Bohrung (42) umfassend am Dichtelement (34) ein Dichtwulst (107) angeordnet ist

63. Absperrelement nach einem der Ansprüche 52 bis 62, **dadurch gekennzeichnet, dass** zur Aufnahme der Dichtwulst (107) im Grundkörper (28) die Bohrung (42) umfassend eine Aufnahme (108) für die Dichtwulst (107) angeordnet ist.

## Claims

1. Shut-off fitting (1) for a flow medium, in particular for a slide valve fitting (2) to which pressure can be applied from both sides, with a fitting housing (3) forming a flow passage (6) and a slide valve chamber (11), and with a multi-part shut-off element (23) for soft sealing the flow passage (6) which can be shut off, and with a valve slide stem (16) extending through a seal arrangement (14) and/or bearing arrangement (15) in a housing neck extension (12) bounding the slide valve chamber (11) and rotatably connected to a stem nut (19) coupled with the shut-off element (23) by means of a threaded engagement, and having a main body (28) with seal elements (34) with at least one external dimension (29) which is slightly smaller than a nominal width (9) of the flow passage (6), **characterised in that**, on oppositely lying support surfaces (32) of the disc-shaped main body (28), ribs (33) standing proud of its surfaces are provided as a means of forming a structure to provide a positive abutment for the seal elements (34), the structure of which is of a complementary design, and the seal elements (34) are secured to the main body (28) by means of support discs (40) disposed on opposite end faces (39) of the seal elements (34) by means of fixing means (41) traversing bores (42) extending through the support discs (40), seal elements (34) and main body (28).

2. Shut-off fitting as claimed in claim 1, **characterised in that** the sealing surfaces (38) extending in the housing neck extension (12) accommodating the seal and/or bearing arrangement (14, 15) are disposed concentrically with a longitudinal mid-axis (24) of the slide valve stem (16) and become conically wider from a base of the housing neck extension (12) in the direction of an end face (70) of the housing neck extension (12).

3. Shut-off fitting as claimed in claim 1 or 2, **characterised in that** the fitting housing (3) is made integrally with the housing neck projection (12).

4. Shut-off fitting as claimed in claim 1 or 2, **characterised in that** the fitting housing (3) with the housing neck extension (12) is made from several parts.

5. Shut-off fitting as claimed in one or more of the preceding claims, **characterised in that** the fitting housing (3) is split in the region of the slide valve chamber (11) in a plane extending perpendicular to the longitudinal mid-axis (24) of the slide valve stem (16).

6. Shut-off fitting as claimed in claim 4, **characterised in that** the fitting housing (3) is split in a dividing plane (90) containing the longitudinal mid-axis (24) of the slide valve stem (16) and a mid-axis (25) of the flow passage (6).

7. Shut-off fitting as claimed in claim 4, **characterised in that** the fitting housing (3) is split in a dividing plane (91) containing the longitudinal mid-axis (24) and extending perpendicular to the mid-axis (25).

8. Shut-off fitting as claimed in claim 4, **characterised in that** the fitting housing (3) is split in a dividing plane (92) containing the mid-axis (25) and extending perpendicular to the longitudinal mid-axis (24).

9. Shut-off fitting as claimed in one or more of the preceding claims, **characterised in that** the housing parts of the fitting housing (3) are detachably connected by means of a flange arrangement (87) in the region of a dividing plane (90, 91, 92).

10. Shut-off fitting as claimed in one or more of the preceding claims, **characterised in that** guides (56) are provided in the slide valve chamber (11) extending parallel with the longitudinal mid-axis (24) to prevent the stem nut (19) from turning.

11. Shut-off fitting as claimed in claim 10, **characterised in that** the guides (56) are provided in the form of groove-type recesses in the slide valve chamber (11) of the fitting housing (3) disposed diametrically opposite one another with respect to the longitudinal mid-axis (24).

12. Shut-off fitting as claimed in claim 10, **characterised in that** the guides (56) are provided in the form of guide strips in the slide valve chamber (11) of the fitting housing (3) disposed diametrically opposite one another with respect to the longitudinal mid-axis (24).

13. Shut-off fitting as claimed in one or more of the preceding claims, **characterised in that** the stem nut (19) is mounted so that it is prevented from turning by means of guide projections in the groove-type or strip-type guides (56) lying diametrically opposite one another with respect to the longitudinal mid-axis (24).

14. Shut-off fitting as claimed in one or more of the preceding claims, **characterised in that** the stem nut (19) is provided with coupling means (31) lying diametrically opposite one another with respect to the longitudinal mid-axis (24) locating in coupling grooves (30) of the main body (28).

15. Shut-off fitting as claimed in one or more of the preceding claims, **characterised in that**, in an end position of the stem nut (19) corresponding to the shut position, the coupling means (31) project out beyond the slide valve chamber (11) in the direction of the flow passage (6).

16. Shut-off fitting as claimed in one or more of the preceding claims, **characterised in that** the main body (28) is of a disc-shaped design and has a mounting bore (45) accommodating the slide valve stem (16) extending through it in the direction of an external dimension (29).

17. Shut-off fitting as claimed in one or more of the preceding claims, **characterised in that** the main body (28) is provided in the form of a hollow body (121) or by means of wall discs (117, 118) connected by means of wall parts (119) and spacer sleeves (120).

18. Shut-off fitting as claimed in one or more of the preceding claims, **characterised in that** the main body is provided with at least one flattened section (123) in a plane extending perpendicular to the longitudinal mid-axis (24).

19. Shut-off fitting as claimed in one or more of the preceding claims, **characterised in that** a compensating element (127) is disposed in the main body (28) in the region of the flattened section (123) and is preferably secured by means of a plug and socket connection (126).

20. Shut-off fitting as claimed in one or more of the preceding claims, **characterised in that** the main body (28) is mounted in a guide arrangement (51) extending linearly in the fitting housing (3) with respect to an adjustment direction so that it is prevented from turning.

21. Shut-off fitting as claimed in one or more of the preceding claims, **characterised in that** the guide arrangement (51) is provided in the form of guide elements (50, 97) projecting laterally out from an external contour of the main body (28) and diametrically opposite guide webs (49) extending in the fitting housing (3) parallel with the longitudinal mid-axis (24).

22. Shut-off fitting as claimed in one or more of the preceding claims, **characterised in that** the guide webs (49) are disposed in the region of housing indentations (37) externally to a flow cross-section (8) of the flow passage (9).

23. Shut-off fitting as claimed in claim 20, **characterised in that** the guide arrangement (51) in the fitting housing (3) for guide elements (50, 97) projecting laterally from the main body (28) is provided in the form of diametrically opposite guide webs (49) or guide grooves (96) extending parallel with the longitudinal mid-axis (24).

24. Shut-off element as claimed in one or more of the preceding claims, **characterised in that** the guide elements (50, 97) co-operating with the guide webs (49) or guide grooves (96) are secured in the main body (28).

25. Shut-off element as claimed in one or more of the preceding claims, **characterised in that** the guide elements (50, 97) are integrally joined to the main body (28).

26. Shut-off element as claimed in one or more of the preceding claims, **characterised in that** the seal elements (34) with the support discs (40) and the guide elements (50) are connected to the main body (28), preferably by fixing means (41), e.g. spacer screw, disposed in the main body mid-plane extending perpendicular to the longitudinal mid-axis (24).

27. Shut-off fitting as claimed in one or more of the preceding claims, **characterised in that** the seal elements (34) have bores (42) through which the fixing means (41) extend, which bores (42) are designed to form a pressure-tight seal with the fixing means (41).

28. Shut-off fitting as claimed in one or more of the preceding claims, **characterised in that** a sealing collar (107) surrounding the bore (42) is provided on the seal element (34).

29. Shut-off fitting as claimed in one or more of the preceding claims, **characterised in that** a mount (108) for the sealing collar (107) surrounding the bore (42) is provided as a means of accommodating the sealing collar (107) in the main body (28).

30. Shut-off fitting as claimed in one or more of the preceding claims, **characterised in that** the seal arrangement (14) for the slide valve stem (16) in the housing neck extension (12) has a seal support (61) surrounding a stem projection (17) comprising an inner and outer seal set, e.g. O-rings (64, 65).

31. Shut-off fitting as claimed in one or more of the preceding claims, **characterised in that** the inner and outer seal set are preferably provided in the form of O-rings (64, 65) arranged in pairs.

32. Shut-off fitting as claimed in one or more of the preceding claims, **characterised in that** the seal support (61) is positioned in the housing neck extension (12) by means of a bayonet lock fitting.

33. Shut-off fitting as claimed in one or more of the preceding claims, **characterised in that** a projection of the seal support (61) accommodating the outer seal set forms a conically extending seal projection.

34. Shut-off fitting as claimed in one or more of the preceding claims, **characterised in that** the bayonet lock fitting of the seal support (61) in the housing neck extension (12) is provided in the form of locking elements (77) projecting diametrically out from an external diameter of the seal support (61) and mounting grooves (78) co-operating with the locking elements (77) in a mounting bore (67) of the housing neck extension (12).

35. Shut-off element as claimed in one or more of the preceding claims, **characterised in that** the seal support (61) in the housing neck extension (12) is prevented from turning by means of at least one flanged nose (116).

36. Shut-off fitting as claimed in one or more of the preceding claims, **characterised in that** a bearing arrangement (15) is provided in the housing neck extension (12) to provide a rotatable mounting for the slide valve stem (16).

37. Shut-off fitting as claimed in one or more of the preceding claims, **characterised in that** the slide valve stem (16) preferably has a bearing collar (57) in the region of the bearing arrangement (15).

38. Shut-off fitting as claimed in one or more of the preceding claims, **characterised in that** the bearing collar (57) is provided in the form of an annular bead with a triangular cross-section standing proud of a stem diameter (109).

39. Shut-off fitting as claimed in one or more of the preceding claims, **characterised in that** a bearing sleeve (59) with a bearing flange (58) for seating the bearing collar (57) is provided in the mounting bore (67) of the housing neck extension (12) for the stem bushing (13).

40. Shut-off fitting as claimed in one or more of the preceding claims, **characterised in that** a sliding ring (60) is disposed between the bearing collar (57) and the seal support (61).

41. Shut-off fitting as claimed in one or more of the preceding claims, **characterised in that** bearing means of the bearing arrangement (15) for the slide valve stem (16) are provided in the form of a bearing layer applied to bearing points in the housing neck extension (12).

42. Shut-off fitting as claimed in one or more of the preceding claims, **characterised in that** a neck ring (73) secured by means of resilient arms (75) in the housing neck projection (12) is disposed in the end face region of the housing neck extension (12) enclosing the stem projection (17) through which the stem extension (17) extends.

43. Shut-off fitting as claimed in one or more of the preceding claims, **characterised in that** the main body (28) of the shut-off element (23) is made from metal, plastic or from materials capable of withstanding high temperatures and/or aggressive media.

44. Shut-off fitting as claimed in one or more of the preceding claims, **characterised in that** the seal element (34) is made from elastomers, plastic or materials capable of withstanding high temperatures and/or aggressive media.

45. Shut-off fitting as claimed in one or more of the preceding claims, **characterised in that** the support disc (40) is made from metal, plastic or materials capable of withstanding high temperatures and/or aggressive media.

46. Shut-off fitting as claimed in one or more of the preceding claims, **characterised in that** the stem nut (19) is made from metal, plastic or materials capable of withstanding high temperatures and/or aggressive media.

47. Shut-off fitting as claimed in one or more of the preceding claims, **characterised in that** the slide valve spindle (16) is made from metal, plastic or materials capable of withstanding high temperatures and/or aggressive media.

48. Shut-off fitting as claimed in one or more of the preceding claims, **characterised in that** the seal support (61) is made from metal, plastic or materials capable of withstanding high temperatures and/or aggressive media.

49. Shut-off fitting as claimed in one or more of the preceding claims, **characterised in that** the fitting housing (3) is made from metal, plastic or materials capable of withstanding high temperatures and/or aggressive media.

50. Shut-off fitting as claimed in one or more of the preceding claims, **characterised in that** the shut-off position of the shut-off element (23) in which the seal elements (34) sit in a sealing contact with the sealing surfaces (38) of the fitting housing (3) is obtained by means of a stop arrangement (81) disposed between the slide valve stem (16) and the main body (28) of the shut-off element (23), in particular by means of a stop disc (83) secured in the end region of the slide valve stem (16) which restricts the displacement path of the threaded stem (16).

51. Shut-off fitting as claimed in one or more of the preceding claims, **characterised in that** the annular bead (35) of the seal element (34) is provided with sealing lips (100, 101).

52. Shut-off element (23) for a shut-off fitting (1) for a flow medium, with a disc-shaped main body (28) provided with soft seal elements (34) on opposite support surfaces (32) and with a mounting bore (45) for a slide valve stem (16) extending through the main body, **characterised in that** ribs (33) are provided on the support surfaces (32) standing proud of their surfaces to form a structure for providing a positive abutment for the seal elements (34) which have a complementary structure, and the seal elements (34) are secured on the main body (28) by support discs (40) disposed on opposite end surfaces (39) of the seal elements (34) by fixing means (41) in bores (42) extending through the support discs (40), seal elements (34) and the main body (28).

53. Shut-off element (23) as claimed in claim 52, **characterised in that** the main body (28) is provided in the form of a hollow body (121) or by means of wall parts (119) and wall discs (117, 118) connected by spacer sleeves (120).

54. Shut-off element as claimed in claim 52 or 53, **characterised in that** the main body is provided with at least one flattened section (123) disposed in a plane extending perpendicular to the longitudinal mid-axis (24).

55. Shut-off element as claimed in one of claims 52 to 54, **characterised in that** a compensating element (127) is disposed in the main body (28) in the region of the flattened section (123), preferably secured by a plug and socket connection (126).

56. Shut-off element as claimed in one of claims 52 to 55, **characterised in that** the main body (28) is provided with coupling grooves (30) for accommodating coupling means (31) of a stem nut (19).

57. Shut-off element as claimed in one of claims 52 to 56, **characterised in that** the main body (28) is provided with guide elements (50, 97) standing proud of an external contour.

58. Shut-off element as claimed in one of claims 52 to 57, **characterised in that** the guide elements (50, 97) are secured in the main body (28).

59. Shut-off element as claimed in one of claims 52 to 58, **characterised in that** the guide elements (50, 97) are integrally joined to the main body (28).

60. Shut-off element as claimed in one of claims 52 to 59, **characterised in that** the seal elements (34) with the support discs (40) and the guide elements (50) are connected to the main body (28), preferably by means of fixing means (41) disposed in a main body mid-plane extending perpendicular to the longitudinal mid-axis (24), e.g. a spacer screw.

61. Shut-off elements as claimed in one of claims 52 to 60, **characterised in that** the fixing means (41) extend in bores (42) through the seal elements (34), which bores (42) form a pressure-tight seal with the fixing means (41).

62. Shut-off element as claimed in one of claims 52 to 61, **characterised in that** a sealing collar (107) is disposed on the seal element (34) surrounding the bore (42).

63. Shut-off element as claimed in one of claims 52 to 62, **characterised in that** a mount (108) for the sealing collar (107) is provided surrounding the bore (42) as a means of accommodating the sealing collar (107) in the main body (28).

## Revendications

1. Robinet d'arrêt (1) pour un écoulement de fluide, en particulier robinet-vanne (2) conçu pour une mise en pression bilatérale, comportant un corps de robinet (3) formant un canal d'écoulement (6) et une chambre de vannes (11), comportant aussi un élément de blocage (23) conformé en plusieurs parties qui assure une étanchéité souple et capable de bloquer le canal d'écoulement (6), comportant aussi une tige de soupape (16) liée en rotation et en prise au moyen d'un filetage, avec un écrou de tige (19) couplé à l'élément de blocage (23), ladite tige traversant l'agencement de joints d'étanchéité (14) et/ou l'agencement de paliers (15) dans un prolongement du collet du corps (12) limitant la chambre de vannes (11), comportant aussi un corps de base (28) doté d'éléments d'étanchéité (34), avec au moins une dimension extérieure (29) légèrement inférieure à la largeur nominale (9) du canal d'écoulement (6), **caractérisé en ce que** sont disposées des nervures (33) sur les surfaces d'appui (32) opposées du corps de base (28) conçu en forme de disque et dépassant desdites surfaces, pour former une structure en vue de constituer un appui en complémentarité de forme avec les éléments d'étanchéité (34) dotés d'une structure identique inversée et **en ce que** les éléments d'étanchéité(34) sont fixés sur le corps de base (28) par des disques d'appui (40) disposés sur les faces frontales opposées (39) des éléments d'étanchéité (34), à l'aide de moyens de fixation (41) croisant dans des perçages (42) les disques d'appui (40), les éléments d'étanchéité (34) et le corps de base (28).

2. Robinet d'arrêt selon la revendication 1, **caractérisé en ce que** dans le prolongement du collet du corps (12) sont posées des surfaces de joint (38) incluant l'agencement des joints d'étanchéité et/ou des paliers (14, 15), disposées concentriquement par rapport à l'axe médian longitudinal (24) de la tige de soupape (16) et formées en s'élargissant en cône depuis une base du prolongement du collet du corps (12) dans le sens de la surface frontale (70) du prolongement du collet du corps (12).

3. Robinet d'arrêt selon l'une quelconque des revendications 1 ou 2, **caractérisé en ce que** le corps de robinet (3) et le prolongement du collet du corps (12) forment une seule partie.

4. Robinet d'arrêt selon l'une quelconque des revendications 1 ou 2, **caractérisé en ce que** le corps de robinet (3) et le prolongement du collet du corps (12) forment plusieurs parties.

5. Robinet d'arrêt selon l'une quelconque ou plusieurs des revendications précédentes, **caractérisé en ce que** le corps de robinet (3) est divisé dans la zone de la chambre de vannes (11) dans un plan s'étendant perpendiculairement à l'axe médian longitudinal (24) de la tige de soupape (16).

6. Robinet d'arrêt selon la revendication 4, **caractérisé en ce que** le corps de robinet (3) est divisé en un plan de joint (90) incluant l'axe médian longitudinal (24) de la tige de soupape (16) et un axe médian (25) du canal d'écoulement (6).

7. Robinet d'arrêt selon la revendication 4, **caractérisé en ce que** le corps de robinet (3) est divisé en un plan de joint (91) s'étendant perpendiculairement à l'axe médian (25) et incluant l'axe médian longitudinal (24).

8. Robinet d'arrêt selon la revendication 4, **caractérisé en ce que** le corps de robinet (3) est divisé en un plan de joint (92) s'étendant perpendiculairement à l'axe médian longitudinal (24) et incluant l'axe médian (25).

9. Robinet d'arrêt selon l'une quelconque ou plusieurs des revendications précédentes, **caractérisé en ce que** les parties du corps de robinet (3) sont reliées de façon amovible au moyen d'un agencement de brides (87) réalisé dans la zone d'un plan de joint (90, 91, 92).

10. Robinet d'arrêt selon l'une quelconque ou plusieurs des revendications précédentes, **caractérisé en ce que** des guidages (56) s'étendant parallèlement à l'axe médian longitudinal (24) sont disposés dans la chambre de vannes (11) comme sécurité contre la rotation de l'écrou de la tige (19).

11. Poutre transversale selon la revendication 10, **caractérisée en ce que** les guidages (56) sont formés par des cavités rainurées dans la chambre de vannes (11) du corps de robinet (3) qui sont diamétralement opposées par rapport à l'axe médian longitudinal (24).

12. Robinet d'arrêt selon la revendication 10, **caractérisé en ce que** les guidages (56) sont formés par des barres de guidage dans la chambre de vannes (11) du corps de robinet (3) qui sont diamétralement opposées par rapport à l'axe médian longitudinal (24).

13. Robinet d'arrêt selon l'une quelconque ou plusieurs des revendications précédentes, **caractérisé en ce que** l'écrou de la tige (19) protégé contre la rotation est logé dans les guidages (56) en forme de rainures ou de barres, au-dessus des prolongements de guidage diamétralement opposés par rapport à l'axe médian longitudinal (24).

14. Robinet d'arrêt selon l'une quelconque ou plusieurs des revendications précédentes, **caractérisé en ce que** l'écrou de la tige (19) est doté de moyens de couplage (31), diamétralement opposés par rapport à l'axe médian longitudinal (24) et s'engageant dans les rainures de couplage (30) du corps de base (28).

15. Robinet d'arrêt selon l'une quelconque ou plusieurs des revendications précédentes, **caractérisé en ce que** dans la position terminale correspondant à la position de blocage de l'écrou de la tige (19), les moyens de couplage (31) sont en saillie au-dessus de la chambre de vannes (11) dans le sens du canal d'écoulement (6).

16. Robinet d'arrêt selon l'une quelconque ou plusieurs des revendications précédentes, **caractérisé en ce que** le corps de base (28) est conformé en disque et est traversé, dans le sens de la dimension extérieure (29), par un orifice de réception (45) de la tige de soupape (16).

17. Robinet d'arrêt selon l'une quelconque ou plusieurs des revendications précédentes, **caractérisé en ce que** le corps de base (28) est réalisé sous forme de corps creux (121) ou de disques de paroi (117, 118) reliés aux moyens d'éléments de paroi (119) et de douilles d'écartement (120).

18. Robinet d'arrêt selon l'une quelconque ou plusieurs des revendications précédentes, **caractérisé en ce que** le corps de base est au moins doté d'un méplat (123) formé dans une zone s'étendant perpendiculairement à l'axe médian longitudinal (24).

19. Robinet d'arrêt selon l'une quelconque ou plusieurs des revendications précédentes, **caractérisé en ce que** dans la zone du méplat (123) est disposé dans le corps de base (28), un élément de compensation (127) de préférence fixé à l'aide d'une liaison enfichable (126).

20. Robinet d'arrêt selon l'une quelconque ou plusieurs des revendications précédentes, **caractérisé en ce que** le corps de base (28) protégé contre la rotation est logé dans le corps de robinet (3) dans un agencement de guidages (51) s'étendant linéairement à un sens de réglage.

21. Robinet d'arrêt selon l'une quelconque ou plusieurs des revendications précédentes, **caractérisé en ce que** l'agencement de guidages (51) est formé par des éléments de guidage (50, 97) en saillie latérale au-dessus du contour extérieur du corps de base (28) et par des barrettes de guidage (49) dans le corps de robinet (3), diamétralement opposées et s'étendant parallèlement à l'axe médian longitudinal (24).

22. Robinet d'arrêt selon l'une quelconque ou plusieurs des revendications précédentes, **caractérisé en ce que** les barrettes de guidage (49) sont disposées dans la zone des formages du corps (37) à l'extérieur d'une section d'écoulement (8) du canal d'écoulement (9).

23. Robinet d'arrêt selon la revendication 20, **caractérisé en ce que** dans le corps de robinet (3), l'agencement de guidages (51) destiné aux éléments de guidage (50,97) en saillie latérale au-dessus du corps de base (28) est formé de barrettes de guidage (49) ou de rainures de guidage (96) diamétralement opposées, s'étendant parallèlement à l'axe médian longitudinal (24).

24. Robinet d'arrêt selon l'une quelconque ou plusieurs des revendications précédentes, **caractérisé en ce que** éléments de guidage (50,97) coopérant avec les barrettes de guidage (49) ou les rainures de guidage (96) sont fixés dans le corps de base (28).

25. Robinet d'arrêt selon l'une quelconque ou plusieurs des revendications précédentes, **caractérisé en ce que** les éléments de guidage (50,97) forment une seule partie avec le corps de base (28).

26. Robinet d'arrêt selon l'une quelconque ou plusieurs des revendications précédentes, **caractérisé en ce que** les éléments d'étanchéité (34) ainsi que les disques d'appui (40) et les éléments de guidage (50) sont assemblés avec le corps de base (28) de préférence à l'aide de moyens de fixation (41), tels que des raccords d'écartement à vis, agencés dans un plan médian du corps de base s'étendant perpendiculairement à l'axe médian longitudinal (24).

27. Robinet d'arrêt selon l'une quelconque ou plusieurs des revendications précédentes, **caractérisé en ce que** les éléments d'étanchéité (34) sont traversés par les moyens de fixation (41) dans des orifices (42), les orifices (42) résistant à la pression en liaison avec les moyens de fixation (41).

28. Robinet d'arrêt selon l'une quelconque ou plusieurs des revendications précédentes, **caractérisé en ce qu'**un boudin d'étanchéité (107) est disposé sur l'élément d'étanchéité (34) incluant l'orifice (42).

29. Robinet d'arrêt selon l'une quelconque ou plusieurs des revendications précédentes, **caractérisé en ce que** pour recevoir le boudin d'étanchéité (107), un logement (108) pour le boudin d'étanchéité (107), incluant l'orifice (42), est disposé dans le corps de base (28).

30. Robinet d'arrêt selon l'une quelconque ou plusieurs des revendications précédentes, **caractérisé en ce que** l'agencement des joints d'étanchéité (14) pour la tige de soupape (16) présente dans le prolongement du collet du corps (12), un support de joint (61) entourant une rallonge de tige (17) et présentant un jeu de joints d'étanchéité intérieurs et extérieurs, comme des joints toriques (64, 65).

31. Robinet d'arrêt selon l'une quelconque ou plusieurs des revendications précédentes, **caractérisé en ce que** le jeu de joints d'étanchéité intérieurs et extérieurs est de préférence formé par un agencement par paire de joints toriques (64, 65).

32. Robinet d'arrêt selon l'une quelconque ou plusieurs des revendications précédentes, **caractérisé en ce que** le support de joint (61) est positionné dans le prolongement du collet du corps (12) au moyen d'un dispositif de verrouillage à baïonnette.

33. Robinet d'arrêt selon l'une quelconque ou plusieurs des revendications précédentes, **caractérisé en ce qu'**un prolongement du support de joint (61) incluant le jeu de joints extérieurs, forme un jeu de joints s'étendant en cône.

34. Robinet d'arrêt selon l'une quelconque ou plusieurs des revendications précédentes, **caractérisé en ce que** le dispositif de verrouillage à baïonnette du support de joint (61) est formé dans le prolongement du collet du corps (12) par des éléments de verrouillage (77) en saillie diamétralement au-dessus du diamètre extérieur du support de joint (61) et par des rainures de réception (78) coordonnées aux éléments de verrouillage (77) dans un orifice de réception (67) du prolongement du collet du corps (12).

35. Robinet d'arrêt selon l'une quelconque ou plusieurs des revendications précédentes, **caractérisé en ce que** le support de joint (61) est protégé contre la rotation dans le prolongement du collet du corps (12) par au moins un ergot (116).

36. Robinet d'arrêt selon l'une quelconque ou plusieurs des revendications précédentes, **caractérisé en ce que** dans le prolongement du collet du corps (12) est disposé un agencement de paliers (15) pour le montage rotatif de la tige de soupape (16).

37. Robinet d'arrêt selon l'une quelconque ou plusieurs des revendications précédentes, **caractérisé en ce que** la tige de soupape (16) présente de préférence un collet de palier (57) dans la zone de l'agencement des paliers (15).

38. Robinet d'arrêt selon l'une quelconque ou plusieurs des revendications précédentes, **caractérisé en ce que** le collet de palier (57) est formé par un bourrelet annulaire à section triangulaire, saillant au-dessus du diamètre de la tige (109).

39. Robinet d'arrêt selon l'une quelconque ou plusieurs des revendications précédentes, **caractérisé en ce que** dans l'orifice de réception (67) du prolongement du collet du corps (12) destiné au passage de la tige (13) est disposée une douille de palier (59) dotée d'une bride de palier (58) pour le support du collet de palier (57).

40. Robinet d'arrêt selon l'une quelconque ou plusieurs des revendications précédentes, **caractérisé en ce qu'**entre le collet de palier (57) et le support de joint (61) est disposée une bague d'étanchéité (60).

41. Robinet d'arrêt selon l'une quelconque ou plusieurs des revendications précédentes, **caractérisé en ce que** des éléments de palier de l'agencement de paliers (15) pour la tige de soupape (16) sont formés par une couche de montage, appliquée aux emplacements des paliers, dans le prolongement du collet du corps (12).

42. Robinet d'arrêt selon l'une quelconque ou plusieurs des revendications précédentes, **caractérisé en ce que** dans la zone frontale du prolongement du collet du corps (12) entourant la rallonge de tige (17) est disposée une bague de centrage (73) traversée par la rallonge de tige (17) et fixée dans le prolongement du collet du corps (12) par des bras flexibles (75).

43. Robinet d'arrêt selon l'une quelconque ou plusieurs des revendications précédentes, **caractérisé en ce que** le corps de base (28) de l'élément de blocage (23) est constitué de métal, de matière plastique ou de matériaux résistants aux températures élevées et/ou aux milieux agressifs.

44. Robinet d'arrêt selon l'une quelconque ou plusieurs des revendications précédentes, **caractérisé en ce que** l'élément d'étanchéité (34) est constitué d'élastomères, de matière plastique ou de matériaux résistants aux températures élevées et/ou aux milieux agressifs.

45. Robinet d'arrêt selon l'une quelconque ou plusieurs des revendications précédentes, **caractérisé en ce que** le disque d'appui (40) est constitué de métal, de matière plastique ou de matériaux résistants aux températures élevées et/ou aux milieux agressifs.

46. Robinet d'arrêt selon l'une quelconque ou plusieurs des revendications précédentes, **caractérisé en ce que** l'écrou de la tige (19) est constitué de métal, de matière plastique ou de matériaux résistants aux températures élevées et/ou aux milieux agressifs.

47. Robinet d'arrêt selon l'une quelconque ou plusieurs des revendications précédentes, **caractérisé en ce que** la tige de soupape (16) est constituée de métal, de matière plastique ou de matériaux résistants aux températures élevées et/ou aux milieux agressifs.

48. Robinet d'arrêt selon l'une quelconque ou plusieurs des revendications précédentes, **caractérisé en ce que** le support de joint (61) est constitué de métal, de matière plastique ou de matériaux résistants aux températures élevées et/ou aux milieux agressifs.

49. Robinet d'arrêt selon l'une quelconque ou plusieurs des revendications précédentes, **caractérisé en ce que** le corps de robinet (3) est constitué de métal, de matière plastique ou de matériaux résistants aux températures élevées et/ou aux milieux agressifs.

50. Robinet d'arrêt selon l'une quelconque ou plusieurs des revendications précédentes, **caractérisé en ce que** la position de blocage de l'élément de blocage (23) dans laquelle les éléments d'étanchéité (34) s'appuient sur les surfaces d'étanchéité (38) du corps de robinet (3) en les rendant étanches, est formée par un agencement de butée (81) réalisé entre la tige de soupape (16) et le corps de base (28) de l'élément de blocage (23), en particulier par un disque de butée (83) fixé dans la zone d'extrémité de la tige de soupape (16), qui limite la course de déplacement de la tige de soupape (16).

51. Robinet d'arrêt selon l'une quelconque ou plusieurs des revendications précédentes, **caractérisé en ce que** le bourrelet périphérique (35) de l'élément d'étanchéité (34) est réalisé avec des lèvres d'étanchéité (100, 101).

52. Elément de blocage (23) pour un robinet d'arrêt (1) pour un écoulement de fluide avec un corps de base (28) conformé en disque, doté d'éléments d'étanchéité (34) assurant une étanchéité souple sur les surface d'appui (32) opposées, et avec un orifice de réception (45) d'une tige de soupape (16), **caractérisé en ce que** sont disposées des nervures (33) sur les surfaces d'appui (32) saillant au-dessus desdites surfaces, pour former une structure en vue de constituer un appui en complémentarité de forme avec les éléments d'étanchéité (34) dotés d'une structure identique inversée et **en ce que** les éléments d'étanchéité (34) sont fixés sur le corps de base (28) au moyen de disques d'appui (40) disposés sur les faces frontales opposées (39) des éléments d'étanchéité (34), à l'aide de moyens de fixation (41) croisant dans des perçages (42) les disques d'appui (40), les éléments d'étanchéité (34) et le corps de base (28).

53. Elément de blocage (23) selon la revendication 52, **caractérisé en ce que** le corps de base (28) est réalisé sous forme de corps creux (121) ou de disques de paroi (117, 118) reliés aux moyens d'éléments de paroi (119) et de douilles d'écartement (120).

54. Elément de blocage selon l'une quelconque des revendications 52 ou 53, **caractérisé en ce que** le corps de base est au moins doté d'un méplat (123) formé dans un plan s'étendant perpendiculairement à l'axe médian longitudinal (24).

55. Elément de blocage selon l'une quelconque des revendications 52 à 54, **caractérisé en ce que** dans la zone du méplat (123) est disposé dans le corps de base (28), un élément de compensation (127) de préférence fixé à l'aide d'une liaison enfichable (126).

56. Elément de blocage selon l'une quelconque des revendications 52 à 55, **caractérisé en ce que** le corps de base (28) est doté de rainures de couplage (30) pour le logement de moyens de couplage (31) d'un écrou de la tige (19).

57. Elément de blocage selon l'une quelconque des revendications 52 à 56, **caractérisé en ce que** le corps de base (28) est doté d'éléments de guidage (50, 97) saillant au-dessus du contour extérieur.

58. Elément de blocage selon l'une quelconque des revendications 52 à 57, **caractérisé en ce que** les éléments de guidage (50,97) sont fixés dans le corps de base (28).

59. Elément de blocage selon l'une quelconque des revendications 52 à 58, **caractérisé en ce que** les éléments de guidage (50,97) forment une seule partie avec le corps de base (28).

60. Elément de blocage selon l'une quelconque des revendications 52 à 59, **caractérisé en ce que** les éléments d'étanchéité (34) ainsi que les disques d'appui (40) et les éléments de guidage (50) sont assemblés avec le corps de base (28) de préférence à l'aide de moyens de fixation (41), tels que des raccords d'écartement à vis, agencés dans un plan médian du corps de base s'étendant perpendiculairement à l'axe médian longitudinal (24).

61. Elément de blocage selon l'une quelconque des revendications 52 à 60, **caractérisé en ce que** les éléments d'étanchéité (34) sont traversés par les moyens de fixation (41) dans des orifices (42), lesdits orifices (42) résistant à la pression en liaison avec les moyens de fixation (41).

62. Elément de blocage selon l'une quelconque des revendications 52 à 61, **caractérisé en ce qu'**un boudin d'étanchéité (107) est disposé sur l'élément d'étanchéité (34) en incluant l'orifice (42).

63. Elément de blocage selon l'une quelconque des revendications 52 à 62, **caractérisé en ce que** pour recevoir le boudin d'étanchéité (107), un logement (108) pour le boudin d'étanchéité (107), incluant l'orifice (42), est disposé dans le corps de base (28).
